# EUROPEAN PATENT SPECIFICATION

(11) **EP 3 691 372 B1**
(45) Date of publication and mention of the grant of the patent: **26.10.2022**
(21) Application number: 18860912.7
(22) Date of filing: 11.09.2018
(51) Int. Cl.: H04W 72/04, H04L 1/00, H04L 5/00, H04W 76/34

(54) **SPS ACTIVATION DETERMINATION METHODS AND USER EQUIPMENT**
SPS-AKTIVIERUNGSBESTIMMUNGSVERFAHREN UND BENUTZERGERÄT
PROCÉDÉS DE DÉTERMINATION DE SPS ET ÉQUIPEMENT UTILISATEUR

(30) Priority: 27.09.2017 CN 201710893076
(43) Date of publication of application: 05.08.2020
(73) Proprietor: NTT DOCOMO, INC., Tokyo 100-6150 (JP)
(72) Inventor: LIU, Jiahui, Beijing 100190 (CN); MU, Qin, Beijing 100190 (CN); LIU, Liu, Beijing 100190 (CN); ISOGAWA, Takayuki, Chiyoda-ku Tokyo (JP)
(74) Representative: Hoffmann Eitle
(86) International application number: PCT/CN2018/105022
(87) International publication number: WO 2019/062539

(56) References cited:
- EP-A1- 3 030 029
- WO-A1-2017/128274
- CN-A- 102 781 111
- CN-A- 102 781 117
- CN-A- 104 113 924
- US-A1- 2010 184 489
- US-A1- 2010 202 389
- PANASONIC: "SPS activation and release", 3GPP DRAFT; R1-084233, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050317519, [retrieved on 2008-11-04]

## Description

### TECHNICAL FIELD

The present application relates to a field of wireless communication, and in particular to methods for determining activation of SPS and user equipment that may be used in a wireless communication system.

### BACKGROUND

Narrow Band Internet of Things (NB-IoT) based on cellular is an emerging technology that can be widely applied worldwide, which supports cellular data connection of devices with low power consumption in a wide area network, may be directly deployed in the GSM network, UMTS network or LTE network, and has characteristics of wide coverage, multiple connections, low speed, low cost, low power consumption, excellent architecture and so on.

In NB-IoT, Semi-Persistent Scheduling (SPS) may be used. SPS means that a base station (eNB) allocates fixed uplink and downlink transmission resources to a User Equipment (UE) in a fixed period, so that the UE periodically uses the allocated resources for data transmission. Specifically, during initial scheduling, the base station indicates the current Downlink Control Information (DCI) to User Equipment (UE) through a Narrow Band Physical Downlink Control Channel (NPDCCH), the DCI may include Resource Block (RB) information, Modulation and Coding Scheme (MCS) information, Hybrid Automatic Repeat Request (HARQ) information and the like. The UE identifies whether it is Semi-Persistent Scheduling according to a scrambling mode of Cyclic Redundancy Check (CRC) in DCI, where if the CRC in the DCI uses a Semi-Persistent Cell-Radio Network Temporary Identifier (SPS C-RNTI) for scrambling, the UE considers that the DCI includes scheduling information of SPS, and will transmit or receive data at the same time-frequency resource locations every fixed period according to the current SPS scheduling information. Subsequently, when the UE receives deactivation information about the SPS, the Semi-Persistent Scheduling is stopped.

Therefore, there is a need for a method for effectively determining activation and/or deactivation of SPS in NB-IoT.

EP 3 030 029 A1 discusses activation of semi persistent scheduling by sending a PDCCH including a resource allocation to the user equipment in which the NDI value set to zero. PANASONIC: "SPS activation and release", 3GPP DRAFT; R1 084233, 4 November 2008 (2008-11-04) discusses DL SPS activation and UL SPS activation based on NDI, TPC, DM-RS and MSB of MCS field being set to 0.

WO 2017/128274 A1 discusses filling an SPS activation/deactivation field in a DCI with a predetermined pattern of bits.

US 2010/202389 A1 a UE receiving an SPS resource release message. The message may include an indicator indicating uplink resource release.

### SUMMARY OF THE DISCLOSURE

The mentioned problems are solved by the subject-matter of the independent claims.

Further preferred embodiments are defined in the dependent claims.

Subject matter discussed throughout the following but not falling under the scope of the claims does not form part of the invention.

### BRIEF DESCRIPTION OF THE DRAWINGS

The above and other objects, features and advantages of the present disclosure will become clearer by describing embodiments of the present disclosure in details with reference to the accompanying drawings.
FIG. 1 shows a MCS correspondence table in LTE;
FIG. 2 shows an example of a MCS correspondence table and removal of MCS status in NB-IoT;
FIG. 3 shows another example of a MCS correspondence table and removal of MCS status in NB-IoT;
FIG. 4 shows a flowchart of a method for determining activation of SPS performed by a UE according to the present disclosure;
FIG. 5 shows a correspondence relationship between resource locations of any two resource blocks of six DCI candidate resource blocks and activation/deactivation of SPS when an aggregation level is 1.
FIG. 6 shows a correspondence relationship between time-frequency resource locations of data and activation/deactivation of SPS in NPDSCH / NPUSCH;
FIG. 7 shows a block diagram of a UE according to the present disclosure;
FIG. 8 shows a flowchart of a method for indicating activation of SPS performed by a base station according to the present disclosure;
FIG. 9 shows a block diagram of a base station according to the present disclosure;
FIG. 10 shows a flowchart of a method for determining activation of SPS performed by a UE according to the present disclosure;
FIG. 11 shows a schematic diagram of structural of MAC CE in NPDSCH;
FIG. 12 shows a block diagram of a UE according to the present disclosure;
FIG. 13 shows a flowchart of a method for indicating activation of SPS performed by a base station according to the present disclosure;
FIG. 14 shows a block diagram of a base station according to the present disclosure;
FIG. 15 shows a flowchart of a method for determining activation of SPS performed by a UE according to a third embodiment of the present disclosure;
FIG. 16 shows a correspondence relationship between MCSs and MCS indexes in NB-IoT;
FIG. 17 shows a correspondence relationship between MCSs and MCS indexes according to the third embodiment of the present disclosure in NB-IoT;
FIG. 18 shows a block diagram of a UE according to the third embodiment of the present disclosure;
FIG. 19 shows a flowchart of a method for indicating activation of SPS performed by a base station according to the third embodiment of the present disclosure;
FIG. 20 shows a block diagram of a base station according to the third embodiment of the present disclosure;
FIG. 21 is a diagram illustrating an example of a hardware structure of the base stations and the user equipment involved in the present disclosure.

### DESCRIPTION OF THE EMBODIMENTS

Methods for determining activation of SPS, methods for indicating activation of SPS and corresponding user equipment and base stations according to the present disclosure will be described below with reference to the accompanying drawings. Like reference numerals refer to like elements throughout the accompanying drawings. It should be understood that the embodiments described herein are merely illustrative and should not be construed as limiting the scope of the present disclosure.

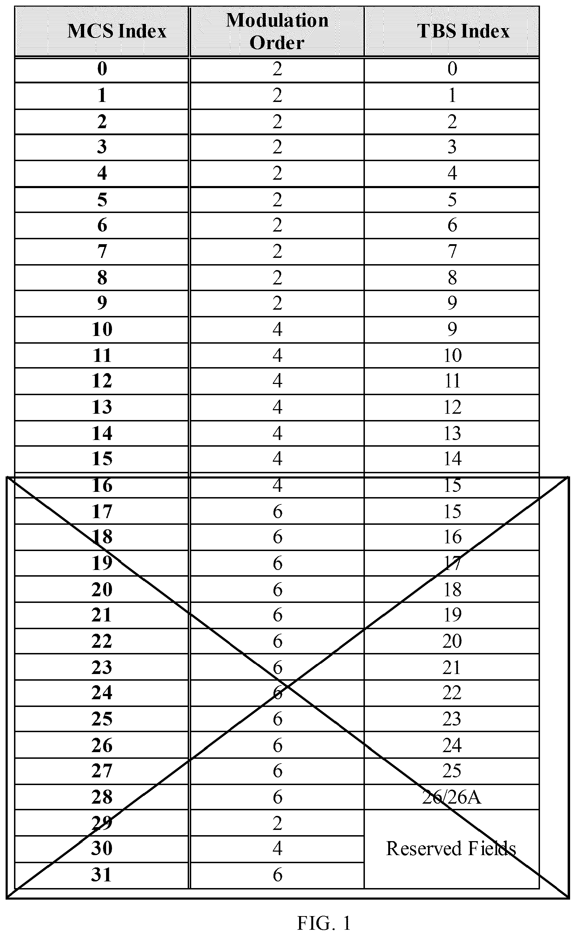

In LTE, activation/deactivation of SPS is indicated by the most significant bit (MSB) of an MCS index in DCI. Specifically, an MCS index field indicating MCS is reduced from 5 bits to 4 bits, so that only 4 bits are used to represent MCS. In this case, as shown in FIG. 1, in an MCS correspondence table, status that may be represented by the MCS index are reduced from 29 status 0-28 (in addition to 3 reserved fields 29-31) indicated by 5 bits to 16 status indicated by 4 bits. In the exemplary MCS correspondence table shown in FIG. 1, high-order MCS status are removed due to reduction of bits, and the MSB in the obtained MCS index may be used to the indicate activation/deactivation of the SPS. For example, when the bit value of the MSB is 0, it may indicate that the SPS is activated; and when the bit value of the MSB is 1, it may indicate that the SPS is deactivated.

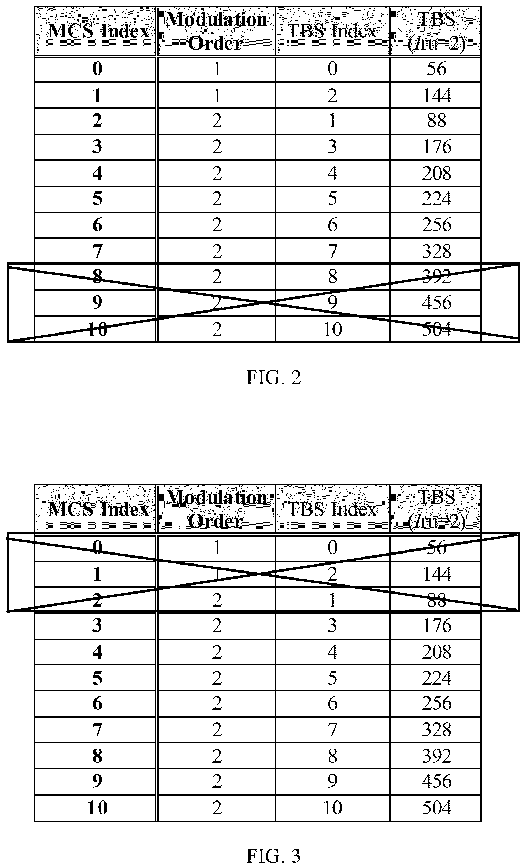

However, in NB-IoT, it is difficult for MCS to follow the above manner of indicating activation/deactivation of SPS in LTE. Compared with LTE, an MCS index in NB-IoT has only 4 bits, and if it is desired to obtain a redundant bit to indicate the activation/deactivation of the SPS by reducing bits (for example, reducing 4 bits to 3 bits), 3 bits are needed to indicate up to 8 MCS status. In this case, it is necessary to consider removing at least 3 high-order or low-order MCS status from 11 MCS status. Specifically, if three high-order MCS status are removed as shown in FIG. 2, more CRC bits and transmission blocks might be required, thereby occupying excessive system resources and resulting in greater waste of resources. However, if three low-order MCS status are removed as shown in FIG. 3, too many repeat redundant bits will also be generated to increase the size of data packets, which will result in a waste of resources.

Therefore, in the present disclosure, in order to accurately and effectively indicate and determine activation and/or deactivation of SPS in NB-IoT, the following specific embodiments are proposed.

### First non-claimed embodiment

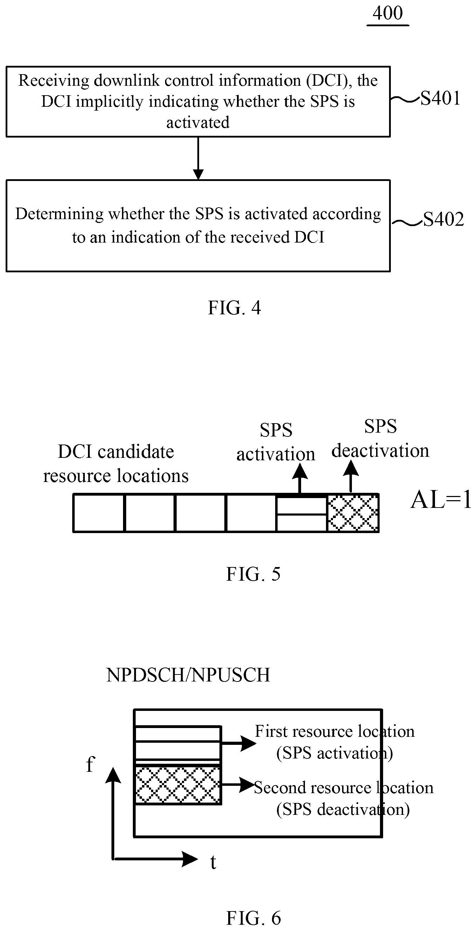

First, a method for determining activation of SPS performed by a UE according to a first embodiment of the present disclosure is described with reference to FIG. 4. FIG. 4 shows a flowchart of the method 400 for determining activation of the SPS.

As shown in FIG. 4, in step S401, downlink control information (DCI) is received, and the DCI implicitly indicates whether the SPS is activated.

In an example of the present disclosure, the way of the DCI implicitly indicating whether the SPS is activated may be: implicitly indicating whether the SPS is activated through radio network temporary identifiers that scramble CRC. Specifically, two radio network temporary identifiers for scrambling may be predefined between a base station and a UE. For example, SPS C-RNTI 1 is used to indicate that the SPS is activated, and SPS C-RNTI 2 is used to indicate that the SPS is deactivated. Thus, when receiving corresponding DCI transmitted by the base station, the UE may perform descrambling verification on the CRC by using SPS C-RNTI 1 and SPS C-RNTI 2, respectively, and an activation/deactivation status of the SPS corresponding to the radio network temporary identifier that can correctly descramble is the activation/deactivation status of the SPS indicated by the DCI. For example, when the radio network temporary identifier SPS C-RNTI 1 can correctly descramble the CRC of the current DCI, the DCI indicates that the SPS is activated; and when the radio network temporary identifier SPS C-RNTI 2 can correctly descramble the CRC of the current DCI, the DCI indicates that the SPS is deactivated.

In another example of the present disclosure, the way of the DCI implicitly indicating whether the SPS is activated may be: implicitly indicating whether the SPS is activated according to a resource location where the DCI is located. FIG. 5 shows a correspondence relationship between any two resource locations of six DCI candidate resource locations and the activation/deactivation of the SPS when an aggregation level (AL) is 1. That is, when the DCI is located at a resource location representing that the SPS is activated, it is indicated that the SPS is activated; when the DCI is located at a resource position representing that the SPS is deactivated, it is indicated that the SPS is deactivated. As shown in FIG. 5, the fifth resource location is used to indicate that the SPS is activated, and the sixth resource location is used to indicate that the SPS is deactivated. In the example shown in FIG. 5, when the UE detects the DCI at the fifth resource location, it may learn that the SPS is activated; and when the UE detects the DCI at the sixth resource location, it may learn that the SPS is deactivated. The correspondence relationship between resource locations and the activation/deactivation of the SPS in FIG. 5 is merely an example. In practical applications, any one or more DCI resource locations may be selected to indicate the activation/deactivation of the SPS, and the aggregation level of resource transmission may also be any value, such as 1, 2, 4, 8 and so on.

In another example of the present disclosure, the way of the DCI implicitly indicating whether the SPS is activated may be: determining whether the SPS is activated according to a resource location of a data channel indicated by the DCI, where the resource location may be a time resource, a frequency resource or a time-frequency resource. Specifically, as shown in FIG. 6, a correspondence relationship between time-frequency resource locations of data transmitted by a Narrow Band Physical Downlink Shared Channel (NPDSCH) / Narrow Band Physical Uplink Shared Channel (NPUSCH) and the activation/deactivation of the SPS is predefined to implicitly indicate whether the SPS is activated. Specifically, a first resource location may be used to indicate that the SPS is activated, and a second resource location may be used to indicate that the SPS is deactivated. Accordingly, when receiving corresponding DCI transmitted by the base station, the UE may determine the activation/deactivation of the SPS by a resource location of a corresponding data channel indicated by the DCI. For example, when data in the NPDSCH indicated by the DCI shown in FIG. 6 is at the first resource position, the SPS is activated; when data in the NPDSCH indicated by the DCI is at the second resource position, the SPS is deactivated.

In step S402, whether the SPS is activated is determined according to an indication of the received DCI.

As described in the above step S401, when the DCI implicitly indicates whether the SPS is activated through radio network temporary identifiers for scrambling on the CRC, the UE may determine the activation/deactivation of the SPS by a radio network temporary identifier (SPS C-RNTI 1 or SPS C-RNTI 2) obtained when the CRC is correctly descrambled. For example, when the radio network temporary identifier SPS C-RNTI 1 can correctly descramble the CRC of the current DCI, the SPS is activated; and when the radio network temporary identifier SPS C-RNTI 2 can correctly descramble the CRC of the current DCI, the SPS is deactivated.

When implicitly indicating whether the SPS is activated according to a resource location where the DCI is located, the UE may determine the activation/deactivation of the SPS by a correspondence relationship between a resource location where the received DCI is located and the activation/deactivation of the SPS. For example, as shown in FIG. 5, when the UE detects the DCI at the fifth resource location, it may learn that the SPS is activated; and when the UE detects the DCI at the sixth resource location, it may learn that the SPS is deactivated.

When determining whether the SPS is activated according to a resource location of a data channel indicated by the DCI, the UE may determine the activation/deactivation of the SPS by a correspondence relationship between a resource location of a corresponding data channel (NPDSCH/NPUSCH) indicated by the DCI and the activation/deactivation of the SPS. For example, as shown in FIG. 6, when the UE learns that data in the NPDSCH indicated by the DCI is at the first resource location, the SPS is activated; and when the UE learns that data in the NPDSCH indicated by the DCI is at the second resource location, the SPS is deactivated.

The method for determining activation of SPS according to the embodiment of the present disclosure may accurately and effectively determine and indicate activation and/or deactivation of the SPS in NB-IoT, thereby reducing signaling overhead and improving utilization efficiency of resources.

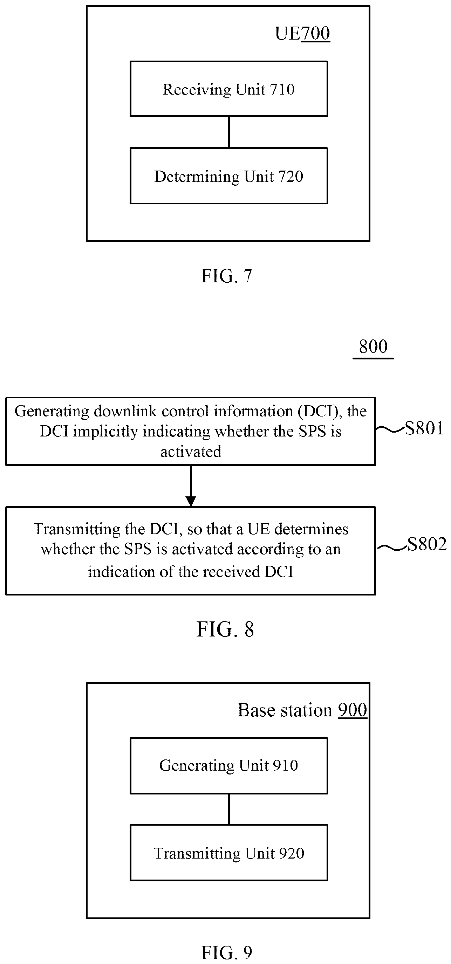

A UE according to an embodiment of the present disclosure will be described below with reference to FIG. 7. FIG. 7 shows a block diagram of a UE 700 according to the first embodiment of the present disclosure. As shown in FIG. 7, the UE 700 comprises a receiving unit 710 and a determining unit 720. The UE 700 may comprise other components in addition to these two units, however, since these components are not related to the content of the embodiments of the present disclosure, illustration and description thereof are omitted herein. Furthermore, since specific details of the following operations performed by the UE 700 according to the embodiment of the present disclosure are the same as those described above with reference to FIGS. 4-6, repeated descriptions of the same details are omitted herein to avoid repetition.

The receiving unit 710 in FIG. 7 receives downlink control information (DCI), and the DCI implicitly indicates whether the SPS is activated.

In an example of the present disclosure, the way of the DCI implicitly indicating whether the SPS is activated may be: implicitly indicating whether the SPS is activated through radio network temporary identifiers that scramble CRC. Specifically, two radio network temporary identifiers for scrambling may be predefined between a base station and the UE. For example, SPS C-RNTI 1 is used to indicate that the SPS is activated, and SPS C-RNTI 2 is used to indicate that the SPS is deactivated. Thus, when receiving corresponding DCI transmitted by the base station, the UE may perform descrambling verification on the CRC by using SPS C-RNTI 1 and SPS C-RNTI 2, respectively, and an activation/deactivation status of the SPS corresponding to the radio network temporary identifier that can correctly descramble is the activation/deactivation status of the SPS indicated by the DCI. For example, when the radio network temporary identifier SPS C-RNTI 1 can correctly descramble the CRC of the current DCI, the DCI indicates that the SPS is activated; and when the radio network temporary identifier SPS C-RNTI 2 can correctly descramble the CRC of the current DCI, the DCI indicates that the SPS is deactivated.

In another example of the present disclosure, the way of the DCI implicitly indicating whether the SPS is activated may be: implicitly indicating whether the SPS is activated according to a resource location where the DCI is located. FIG. 5 shows a correspondence relationship between any two resource locations of six DCI candidate resource locations and the activation/deactivation of the SPS when an aggregation level (AL) is 1. That is, when the DCI is located at a resource location representing that the SPS is activated, it is indicated that the SPS is activated; when the DCI is located at a resource position representing that the SPS is deactivated, it is indicated that the SPS is deactivated. As shown in FIG. 5, the fifth resource location is used to indicate that the SPS is activated, and the sixth resource location is used to indicate that the SPS is deactivated. In the example shown in FIG. 5, when the UE detects the DCI at the fifth resource location, it may learn that the SPS is activated; and when the UE detects the DCI at the sixth resource location, it may learn that the SPS is deactivated. The correspondence relationship between resource locations and the activation/deactivation of the SPS in FIG. 5 is merely an example. In practical applications, any one or more DCI resource locations may be selected to indicate the activation/deactivation of the SPS, and the aggregation level of resource transmission may also be any value, such as 1, 2, 4, 8 and so on.

In another example of the present disclosure, the way of the DCI implicitly indicating whether the SPS is activated may be: determining whether the SPS is activated according to a resource location of a data channel indicated by the DCI, where the resource location may be a time resource, a frequency resource or a time-frequency resource. Specifically, as shown in FIG. 6, a correspondence relationship between time-frequency resource locations of data transmitted by a Narrow Band Physical Downlink Shared Channel (NPDSCH) / Narrow Band Physical Uplink Shared Channel (NPUSCH) and the activation/deactivation of the SPS is predefined to implicitly indicate whether the SPS is activated. Specifically, a first resource location may be used to indicate that the SPS is activated, and a second resource location may be used to indicate that the SPS is deactivated. Accordingly, when receiving corresponding DCI transmitted by the base station, the UE may determine the activation/deactivation of the SPS by a resource location of a corresponding data channel indicated by the DCI. For example, when data in the NPDSCH indicated by the DCI shown in FIG. 6 is at the first resource position, the SPS is activated; when data in the NPDSCH indicated by the DCI is at the second resource position, the SPS is deactivated.

The determining unit 720 determines whether the SPS is activated according to an indication of the received DCI.

As described above, when the DCI implicitly indicates whether the SPS is activated through radio network temporary identifiers for scrambling on the CRC, the determining unit 720 may determine the activation/deactivation of the SPS by a radio network temporary identifier (SPS C-RNTI 1 or SPS C-RNTI 2) obtained when the CRC is correctly descrambled. For example, when the radio network temporary identifier SPS C-RNTI 1 can correctly descramble the CRC of the current DCI, the SPS is activated; and when the radio network temporary identifier SPS C-RNTI 2 can correctly descramble the CRC of the current DCI, the SPS is deactivated.

When implicitly indicating whether the SPS is activated according to a resource location where the DCI is located, the determining unit 720 may determine the activation/deactivation of the SPS by a correspondence relationship between a resource location where the received DCI is located and the activation/deactivation of the SPS. For example, as shown in FIG. 5, when the UE detects the DCI at the fifth resource location, it may learn that the SPS is activated; and when the UE detects the DCI at the sixth resource location, it may learn that the SPS is deactivated.

When determining whether the SPS is activated according to a resource location of a data channel indicated by the DCI, the determining unit 720 may determine the activation/deactivation of the SPS by a correspondence relationship between a resource location of a corresponding data channel (NPDSCH/NPUSCH) indicated by the DCI and the activation/deactivation of the SPS. For example, as shown in FIG. 6, when the UE learns that data in the NPDSCH indicated by the DCI is at the first resource location, the SPS is activated; and when the UE learns that data in the NPDSCH indicated by the DCI is at the second resource location, the SPS is deactivated.

The UE according to the embodiment of the present disclosure may accurately and effectively determine and indicate activation and/or deactivation of SPS in NB-IoT, thereby reducing signaling overhead and improving utilization efficiency of resources.

A method for indicating activation of SPS performed by a base station according to the first embodiment of the present disclosure will be described below with reference to FIG. 8. FIG. 8 shows a flowchart of the method 800 for indicating activation of the SPS.

As shown in FIG. 8, in step S801, downlink control information (DCI) is generated, and the DCI implicitly indicates whether the SPS is activated.

In an example of the present disclosure, the way of the DCI implicitly indicating whether the SPS is activated may be: implicitly indicating whether the SPS is activated through radio network temporary identifiers that scramble CRC. Specifically, two radio network temporary identifiers for scrambling may be predefined between a base station and a UE. For example, SPS C-RNTI 1 is used to indicate that the SPS is activated, and SPS C-RNTI 2 is used to indicate that the SPS is deactivated. Thus, when receiving corresponding DCI transmitted by the base station, the UE may perform descrambling verification on the CRC by using SPS C-RNTI 1 and SPS C-RNTI 2, respectively, and an activation/deactivation status of the SPS corresponding to the radio network temporary identifier that can correctly descramble is the activation/deactivation status of the SPS indicated by the DCI. For example, when the radio network temporary identifier SPS C-RNTI 1 can correctly descramble the CRC of the current DCI, the DCI indicates that the SPS is activated; and when the radio network temporary identifier SPS C-RNTI 2 can correctly descramble the CRC of the current DCI, the DCI indicates that the SPS is deactivated.

In another example of the present disclosure, the way of the DCI implicitly indicating whether the SPS is activated may be: implicitly indicating whether the SPS is activated according to a resource location where the DCI is located. FIG. 5 shows a correspondence relationship between any two resource locations of six DCI candidate resource locations and the activation/deactivation of the SPS when an aggregation level (AL) is 1. That is, when the DCI is located at a resource location representing that the SPS is activated, it is indicated that the SPS is activated; when the DCI is located at a resource position representing that the SPS is deactivated, it is indicated that the SPS is deactivated. As shown in FIG. 5, the fifth resource location is used to indicate that the SPS is activated, and the sixth resource location is used to indicate that the SPS is deactivated. In the example shown in FIG. 5, when the UE detects the DCI at the fifth resource location, it may learn that the SPS is activated; and when the UE detects the DCI at the sixth resource location, it may learn that the SPS is deactivated. The correspondence relationship between resource locations and the activation/deactivation of the SPS in FIG. 5 is merely an example. In practical applications, any one or more DCI resource locations may be selected to indicate the activation/deactivation of the SPS, and the aggregation level of resource transmission may also be any value, such as 1, 2, 4, 8 and so on.

In another example of the present disclosure, the way of the DCI implicitly indicating whether the SPS is activated may be: determining whether the SPS is activated according to a resource location of a data channel indicated by the DCI, where the resource location may be a time resource, a frequency resource or a time-frequency resource. Specifically, as shown in FIG. 6, a correspondence relationship between time-frequency resource locations of data transmitted by a Narrow Band Physical Downlink Shared Channel (NPDSCH) / Narrow Band Physical Uplink Shared Channel (NPUSCH) and the activation/deactivation of the SPS is predefined to implicitly indicate whether the SPS is activated. Specifically, a first resource location may be used to indicate that the SPS is activated, and a second resource location may be used to indicate that the SPS is deactivated. Accordingly, when receiving corresponding DCI transmitted by the base station, the UE may determine the activation/deactivation of the SPS by a resource location of a corresponding data channel indicated by the DCI. For example, when data in the NPDSCH indicated by the DCI shown in FIG. 6 is at the first resource position, the SPS is activated; when data in the NPDSCH indicated by the DCI is at the second resource position, the SPS is deactivated.

In step S802, the DCI is transmitted, so that the UE determines whether the SPS is activated according to an indication of the received DCI.

As described in the above step S801, when the DCI implicitly indicates whether the SPS is activated through radio network temporary identifiers for scrambling on the CRC, the UE may determine the activation/deactivation of the SPS by a radio network temporary identifier (SPS C-RNTI 1 or SPS C-RNTI 2) obtained when the CRC is correctly descrambled. For example, when the radio network temporary identifier SPS C-RNTI 1 can correctly descramble the CRC of the current DCI, the SPS is activated; and when the radio network temporary identifier SPS C-RNTI 2 can correctly descramble the CRC of the current DCI, the SPS is deactivated.

When implicitly indicating whether the SPS is activated according to a resource location where the DCI is located, the UE may determine the activation/deactivation of the SPS by a correspondence relationship between a resource location where the received DCI is located and the activation/deactivation of the SPS. For example, as shown in FIG. 5, when the UE detects the DCI at the fifth resource location, it may learn that the SPS is activated; and when the UE detects the DCI at the sixth resource location, it may learn that the SPS is deactivated.

When determining whether the SPS is activated according to a resource location of a data channel indicated by the DCI, the UE may determine the activation/deactivation of the SPS by a correspondence relationship between a resource location of a corresponding data channel (NPDSCH/NPUSCH) indicated by the DCI and the activation/deactivation of the SPS. For example, as shown in FIG. 6, when the UE learns that data in the NPDSCH indicated by the DCI is at the first resource location, the SPS is activated; and when the UE learns that data in the NPDSCH indicated by the DCI is at the second resource location, the SPS is deactivated.

The method for indicating activation of SPS according to the embodiment of the present disclosure may accurately and effectively determine and indicate activation and/or deactivation of the SPS in NB-IoT, thereby reducing signaling overhead and improving utilization efficiency of resources.

A base station according to an embodiment of the present disclosure will be described below with reference to FIG. 9. FIG. 9 shows a block diagram of a base station 900 according to the first embodiment of the present disclosure. As shown in FIG. 9, the base station 900 comprises a generating unit 910 and a transmitting unit 920. The base station 900 may comprise other components in addition to these two units, however, since these components are not related to the content of the embodiments of the present disclosure, illustration and description thereof are omitted herein. Furthermore, since specific details of the following operations performed by the base station 900 according to the embodiment of the present disclosure are the same as those described above with reference to FIG. 8, repeated descriptions of the same details are omitted herein to avoid repetition.

The generating unit 910 in FIG. 9 is configured to generate downlink control information (DCI), and the DCI implicitly indicates whether the SPS is activated.

In an example of the present disclosure, the way of the DCI implicitly indicating whether the SPS is activated may be: implicitly indicating whether the SPS is activated through radio network temporary identifiers that scramble CRC. Specifically, two radio network temporary identifiers for scrambling may be predefined between the base station and a UE. For example, SPS C-RNTI 1 is used to indicate that the SPS is activated, and SPS C-RNTI 2 is used to indicate that the SPS is deactivated. Thus, when receiving corresponding DCI transmitted by the base station, the UE may perform descrambling verification on the CRC by using SPS C-RNTI 1 and SPS C-RNTI 2, respectively, and an activation/deactivation status of the SPS corresponding to the radio network temporary identifier that can correctly descramble is the activation/deactivation status of the SPS indicated by the DCI. For example, when the radio network temporary identifier SPS C-RNTI 1 can correctly descramble the CRC of the current DCI, the DCI indicates that the SPS is activated; and when the radio network temporary identifier SPS C-RNTI 2 can correctly descramble the CRC of the current DCI, the DCI indicates that the SPS is deactivated.

In another example of the present disclosure, the way of the DCI implicitly indicating whether the SPS is activated may be: implicitly indicating whether the SPS is activated according to a resource location where the DCI is located. FIG. 5 shows a correspondence relationship between any two resource locations of six DCI candidate resource locations and the activation/deactivation of the SPS when an aggregation level (AL) is 1. That is, when the DCI is located at a resource location representing that the SPS is activated, it is indicated that the SPS is activated; when the DCI is located at a resource position representing that the SPS is deactivated, it is indicated that the SPS is deactivated. As shown in FIG. 5, the fifth resource location is used to indicate that the SPS is activated, and the sixth resource location is used to indicate that the SPS is deactivated. In the example shown in FIG. 5, when the UE detects the DCI at the fifth resource location, it may learn that the SPS is activated; and when the UE detects the DCI at the sixth resource location, it may learn that the SPS is deactivated. The correspondence relationship between resource locations and the activation/deactivation of the SPS in FIG. 5 is merely an example. In practical applications, any one or more DCI resource locations may be selected to indicate the activation/deactivation of the SPS, and the aggregation level of resource transmission may also be any value, such as 1, 2, 4, 8 and so on.

In another example of the present disclosure, the way of the DCI implicitly indicating whether the SPS is activated may be: determining whether the SPS is activated according to a resource location of a data channel indicated by the DCI, where the resource location may be a time resource, a frequency resource or a time-frequency resource. Specifically, as shown in FIG. 6, a correspondence relationship between time-frequency resource locations of data transmitted by a Narrow Band Physical Downlink Shared Channel (NPDSCH) / Narrow Band Physical Uplink Shared Channel (NPUSCH) and the activation/deactivation of the SPS is predefined to implicitly indicate whether the SPS is activated. Specifically, a first resource location may be used to indicate that the SPS is activated, and a second resource location may be used to indicate that the SPS is deactivated. Accordingly, when receiving corresponding DCI transmitted by the base station, the UE may determine the activation/deactivation of the SPS by a resource location of a corresponding data channel indicated by the DCI. For example, when data in the NPDSCH indicated by the DCI shown in FIG. 6 is at the first resource position, the SPS is activated; when data in the NPDSCH indicated by the DCI is at the second resource position, the SPS is deactivated.

The transmitting unit 920 is configured to transmit the DCI, so that the UE determines whether the SPS is activated according to an indication of the received DCI.

As described above, when the DCI implicitly indicates whether the SPS is activated through radio network temporary identifiers for scrambling on the CRC, the UE may determine the activation/deactivation of the SPS by a radio network temporary identifier (SPS C-RNTI 1 or SPS C-RNTI 2) obtained when the CRC is correctly descrambled. For example, when the radio network temporary identifier SPS C-RNTI 1 can correctly descramble the CRC of the current DCI, the SPS is activated; and when the radio network temporary identifier SPS C-RNTI 2 can correctly descramble the CRC of the current DCI, the SPS is deactivated.

When implicitly indicating whether the SPS is activated according to a resource location where the DCI is located, the UE may determine the activation/deactivation of the SPS by a correspondence relationship between a resource location where the received DCI is located and the activation/deactivation of the SPS. For example, as shown in FIG. 5, when the UE detects the DCI at the fifth resource location, it may learn that the SPS is activated; and when the UE detects the DCI at the sixth resource location, it may learn that the SPS is deactivated.

When determining whether the SPS is activated according to a resource location of a data channel indicated by the DCI, the UE may determine the activation/deactivation of the SPS by a correspondence relationship between a resource location of a corresponding data channel (NPDSCH/NPUSCH) indicated by the DCI and the activation/deactivation of the SPS. For example, as shown in FIG. 6, when the UE learns that data in the NPDSCH indicated by the DCI is at the first resource location, the SPS is activated; and when the UE learns that data in the NPDSCH indicated by the DCI is at the second resource location, the SPS is deactivated.

The base station according to the embodiment of the present disclosure may accurately and effectively determine and indicate activation and/or deactivation of SPS in NB-IoT, thereby reducing signaling overhead and improving utilization efficiency of resources.

### Second non-claimed embodiment

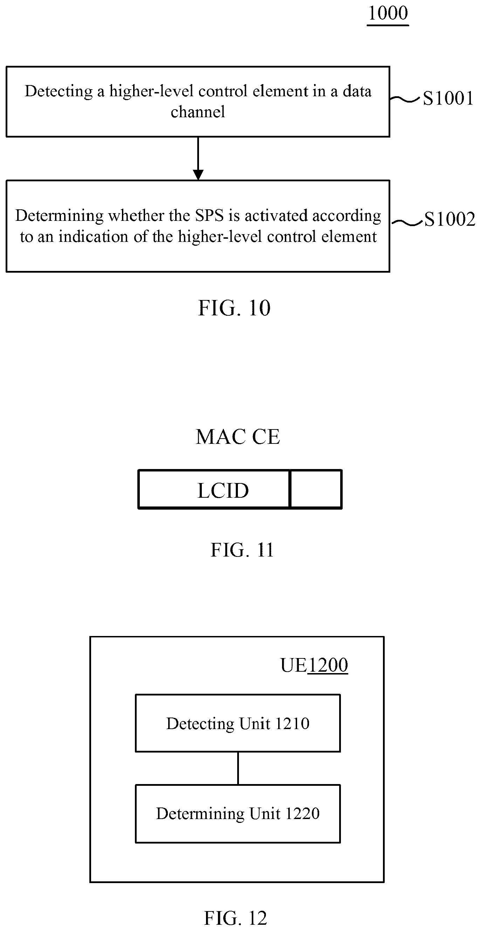

A method for determining activation of SPS performed by a UE according to a second embodiment of the present disclosure will be described below with reference to FIG. 10. FIG. 10 shows a flowchart of the method 1000 for determining activation of the SPS.

As shown in FIG. 10, in step S1001, a high-level control element in a data channel is detected.

In the embodiment of the present disclosure, the base station may indicate activation/deactivation of the SPS by a MAC CE high-level control element in a NPDSCH. Specifically, as shown in FIG. 11, the MAC CE in the NPDSCH may include a logical channel identifier (LCID) and a subsequent bit, where a specific value may be assigned to the LCID to indicate whether the bit after the LCID is used to represent an activation/deactivation indication for the SPS. In the case where the LCID indicates that the bit after the LCID is used to represent an activation/deactivation indication for the SPS, the bit may be used to indicate an activation/deactivation status. For example, a bit with a value of 0 may be used to indicate that the SPS is activated; and a bit with a value of 1 may be used to indicate that the SPS is deactivated. For example, the specific value may be 11111, in which case when a 5-bit LCID is assigned a value of 11111, it may be learned that a subsequent bit is used to indicate the activation/deactivation status of the SPS. When the bit following the LCID (11111) has a value of 0, it indicates that the SPS is activated; and when the bit following the LCID has a value of 1, it indicates that the SPS is deactivated. Accordingly, the UE may detect the higher-level control element in a data channel.

In step S1002, whether the SPS is activated is determined according to an indication of the high-level control element.

As described above, the UE may obtain the value of the logical channel identifier LCID and its corresponding activation/deactivation status of the SPS according to the MAC CE higher-layer control signaling detected in the NPDSCH.

The method for determining activation of SPS according to the embodiment of the present disclosure may accurately and effectively determine and indicate activation and/or deactivation of the SPS in NB-IoT, thereby reducing signaling overhead and improving utilization efficiency of resources.

A UE according to the second embodiment of the present disclosure will be described below with reference to FIG. 12. FIG. 12 shows a block diagram of the UE 1200 according to the second embodiment of the present disclosure. As shown in FIG. 12, the UE 1200 comprises a detecting unit 1210 and a determining unit 1220. The UE 1200 may comprise other components in addition to these two units, however, since these components are not related to the content of the embodiments of the present disclosure, illustration and description thereof are omitted herein. Furthermore, since specific details of the following operations performed by the UE 1200 according to the embodiment of the present disclosure are the same as those described above with reference to FIGS. 10-11, repeated descriptions of the same details are omitted herein to avoid repetition.

The detecting unit 1210 in FIG. 12 detects a high-level control element in a data channel.

In the embodiment of the present disclosure, the base station may indicate activation/deactivation of the SPS by a MAC CE high-level control element in a NPDSCH. Specifically, as shown in FIG. 11, the MAC CE in the NPDSCH may include a logical channel identifier (LCID) and a subsequent bit, where a specific value may be assigned to the LCID to indicate whether the bit after the LCID is used to represent an activation/deactivation indication for the SPS. In the case where the LCID indicates that the bit after the LCID is used to represent an activation/deactivation indication for the SPS, the bit may be used to indicate an activation/deactivation status. For example, a bit with a value of 0 may be used to indicate that the SPS is activated; and a bit with a value of 1 may be used to indicate that the SPS is deactivated. For example, the specific value may be 11111, in which case when a 5-bit LCID is assigned a value of 11111, it may be learned that a subsequent bit is used to indicate the activation/deactivation status of the SPS. When the bit following the LCID (11111) has a value of 0, it indicates that the SPS is activated; and when the bit following the LCID has a value of 1, it indicates that the SPS is deactivated. Accordingly, the detecting unit 1210 may detect the higher-level control element in a data channel.

The determining unit 1220 determines whether the SPS is activated according to an indication of the high-level control element.

As described above, the determining unit 1220 may obtain the value of the logical channel identifier LCID and its corresponding activation/deactivation status of the SPS according to the MAC CE higher-layer control signaling detected by the detecting unit 1210 in the NPDSCH.

The UE according to the embodiment of the present disclosure may accurately and effectively determine and indicate activation and/or deactivation of SPS in NB-IoT, thereby reducing signaling overhead and improving utilization efficiency of resources.

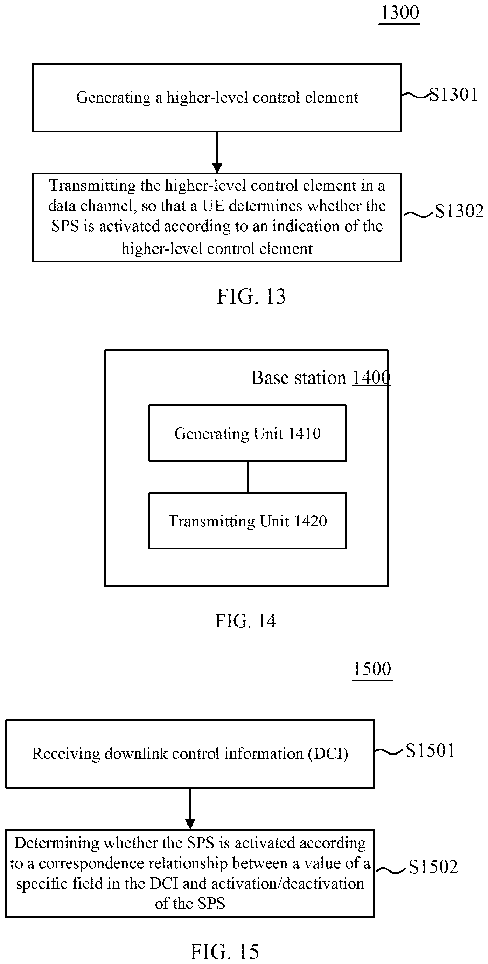

A method for indicating activation of SPS performed by a base station according to the second embodiment of the present disclosure will be described below with reference to FIG. 13. FIG. 13 shows a flowchart of the method 1300 for indicating activation of the SPS.

As shown in FIG. 13, in step S1301, a high-level control element is generated.

In the embodiment of the present disclosure, the base station may indicate activation/deactivation of the SPS by a MAC CE high-level control element in a NPDSCH. Specifically, as shown in FIG. 11, the MAC CE in the NPDSCH may include a logical channel identifier (LCID) and a subsequent bit, where a specific value may be assigned to the LCID to indicate whether the bit after the LCID is used to represent an activation/deactivation indication for the SPS. In the case where the LCID indicates that the bit after the LCID is used to represent an activation/deactivation indication for the SPS, the bit may be used to indicate an activation/deactivation status. For example, a bit with a value of 0 may be used to indicate that the SPS is activated; and a bit with a value of 1 may be used to indicate that the SPS is deactivated. For example, the specific value may be 11111, in which case when a 5-bit LCID is assigned a value of 11111, it may be learned that a subsequent bit is used to indicate the activation/deactivation status of the SPS. When the bit following the LCID (11111) has a value of 0, it indicates that the SPS is activated; and when the bit following the LCID has a value of 1, it indicates that the SPS is deactivated. Accordingly, a UE may detect the higher-level control element in a data channel.

In step S1302, the higher-level control element is transmitted in a data channel so that the UE determines whether the SPS is activated according to an indication of the high-level control element.

As described above, the base station may transmit the higher-level control element in a data channel, so that the UE may obtain the value of the logical channel identifier LCID and its corresponding activation/deactivation status of the SPS according to the MAC CE higher-layer control signaling detected in the NPDSCH.

The method for indicating activation of SPS according to the embodiment of the present disclosure may accurately and effectively determine and indicate activation and/or deactivation of the SPS in NB-IoT, thereby reducing signaling overhead and improving utilization efficiency of resources.

A base station according to the second embodiment of the present disclosure will be described below with reference to FIG. 14. FIG. 14 shows a block diagram of the base station 1400 according to the embodiment of the present disclosure. As shown in FIG. 14, the base station 1400 comprises a generating unit 1410 and a transmitting unit 1420. The base station 1400 may comprise other components in addition to these two units, however, since these components are not related to the content of the embodiments of the present disclosure, illustration and description thereof are omitted herein. Furthermore, since specific details of the following operations performed by the base station 1400 according to the embodiment of the present disclosure are the same as those described above with reference to FIG. 13, repeated descriptions of the same details are omitted herein to avoid repetition.

The generating unit 1410 in FIG. 14 is configured to generate a high-level control element.

In the embodiment of the present disclosure, the base station may indicate activation/deactivation of the SPS by a MAC CE high-level control element in a NPDSCH. Specifically, as shown in FIG. 11, the MAC CE in the NPDSCH may include a logical channel identifier (LCID) and a subsequent bit, where a specific value may be assigned to the LCID to indicate whether the bit after the LCID is used to represent an activation/deactivation indication for the SPS. In the case where the LCID indicates that the bit after the LCID is used to represent an activation/deactivation indication for the SPS, the bit may be used to indicate an activation/deactivation status. For example, a bit with a value of 0 may be used to indicate that the SPS is activated; and a bit with a value of 1 may be used to indicate that the SPS is deactivated. For example, the specific value may be 11111, in which case when a 5-bit LCID is assigned a value of 11111, it may be learned that a subsequent bit is used to indicate the activation/deactivation status of the SPS. When the bit following the LCID (11111) has a value of 0, it indicates that the SPS is activated; and when the bit following the LCID has a value of 1, it indicates that the SPS is deactivated. Accordingly, a UE may detect the higher-level control element in a data channel.

The transmitting unit 1420 is configured to transmit the higher-level control element in a data channel, so that the UE determines whether the SPS is activated according to an indication of the high-level control element.

As described above, the transmitting unit 1420 may transmit a MAC CE higher-level control signaling in a NPDSCH, so that the UE may obtain the value of the logical channel identifier LCID and its corresponding activation/deactivation status of the SPS.

The base station according to the embodiment of the present disclosure may accurately and effectively determine and indicate activation and/or deactivation of SPS in NB-IoT, thereby reducing signaling overhead and improving utilization efficiency of resources.

### Third claimed embodiment

A method for determining activation of SPS performed by a UE according to a third embodiment of the present disclosure will be described below with reference to FIG. 15. FIG. 15 shows a flowchart of the method 1500 for determining activation of the SPS.

As shown in FIG. 15, in step S1501, downlink control information (DCI) is received.

In the embodiment of the present disclosure, whether the SPS is activated may be indicated by a correspondence relationship between a value of a specific field in the DCI and activation and/or deactivation of the SPS.

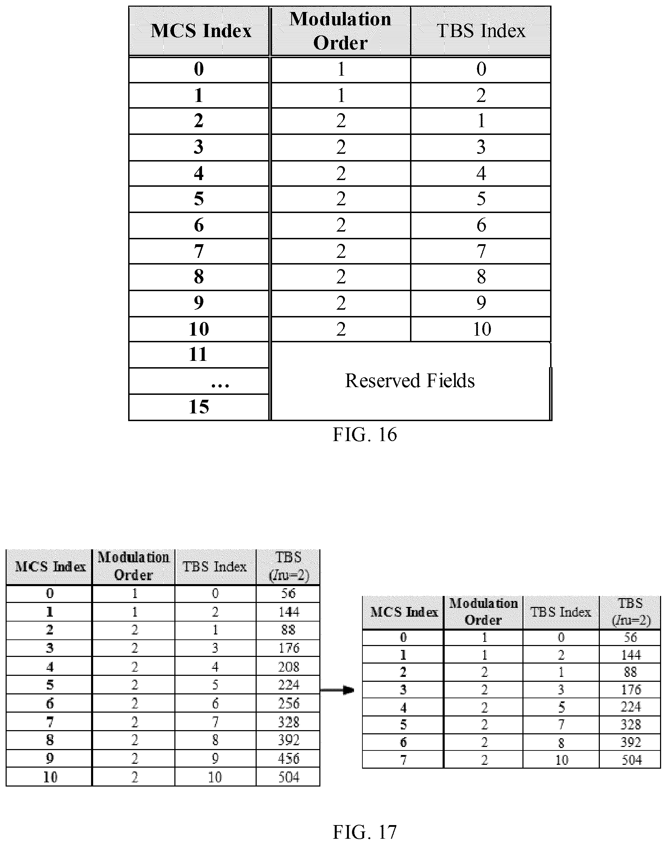

Specifically, in an example of the present disclosure, the value of the specific field may be a specific value of a reserved field in the DCI. For example, the reserved field in the DCI may be a reserved field in an MCS index. FIG. 16 shows a correspondence relationship between MCSs and MCS indexes for an uplink SPS in the current NB-IoT. It can be seen that when the MCS index is 0-10 (i.e., 0000-1010), each MCS index corresponds to a modulation order and a TBS index; and when the MCS index is 11-15 (i.e., 1011-1111), there are reserved fields without corresponding modulation orders and TBS indexes. Therefore, any value of the MCS index from 11 to 15 may be corresponded to the activation/deactivation of the SPS. For example, the MCS index of 15 (i.e., 1111) may be selected to correspond to the deactivation of the SPS. Furthermore, after a field corresponding to the deactivation status of the SPS has been determined in any value of the MCS index from 11 to 15, all the MCS indexes of 0-10 corresponding to different modulation orders and TBS indexes respectively may be considered as corresponding to the activation status of the SPS. In addition, in a correspondence table of MCSs and MCS indexes for a downlink SPS, a reserved field may also be selected in a manner similar to that shown in FIG. 16 to correspond to the activation/deactivation status of the SPS.

In another example of the present disclosure, the reserved field in the DCI may also be a reserved field in a subcarrier indication in uplink transmission called by the DCI. A subcarrier indication field in the DCI may contain 6 bits and 64 status, among which only 48 status (the subcarrier frequency is 3.75 KHz) or 18 status (the subcarrier frequency is 15 KHz) are required in practical applications. Therefore, a specific value of a reserved field in the DCI subcarrier indication that has not been used may be used to indicate the activation/deactivation of the SPS. For example, a 6-bit value of 111111 may be used to indicate that the SPS is deactivated, while a 6-bit value of 111110 may be used to indicate that the SPS is activated.

In still another example of the present disclosure, the specific field may also be one or more redundant bits in the DCI. For example, an NPDCCH order indicator in downlink transmission called by the DCI is used to indicate how a Random Access Channel

(RACH) is triggered during non-semi-persistent transmission. However, if it is semi-persistent scheduling currently, the NPDCCH order indicator does not need to indicate the status of the RACH, so it may be regarded as a redundant bit under the SPS. In this case, a correspondence relationship between the value of the NPDCCH order indicator and the activation/deactivation of the SPS may be established. For example, when the value of the NPDCCH order indicator is 0, it indicates that the SPS is activated; and when the value of the NPDCCH order indicator is 1, it indicates that the SPS is deactivated.

In yet another example of the present disclosure, one or more of the specific value of the reserved field and the redundant bits in the DCI described above may be simultaneously used to collectively indicate the activation/deactivation of the SPS. Optionally, all of the reserved field of MCS, the reserved field of the subcarrier indication, and the NPDCCH order indicator in the DCI may be defined as fixed values, for example, all bit values are set to 1. Further, specific one or more bits or fields in the DCI may be set to fixed values when the activation and the deactivation of the SPS needs to be indicated, for example, for the deactivation, one or more bits or fields (such as, scheduling delay fields, resource allocation fields, number-of-repetition-times fields, etc.) other than the reserved field of MCS, the reserved field of the subcarrier indication, and the NPDCCH order indicator are all set to fixed values (for example, all are set to 1) to reduce the error rate of the indication.

Optionally, indicating whether the SPS is activated according to a correspondence relationship between a value of a specific field in the DCI and the activation and/or deactivation of the SPS may further comprise: reducing at least one bit from a field indicating a modulation and coding scheme index in the DCI, in order to use remaining bits of the field to represent the modulation and coding scheme index; indicating whether the SPS is activated according to a correspondence relationship between the value of the at least one bit and the activation and/or deactivation of the SPS. Specifically, as shown in FIG. 17, at least one bit may be reduced from a 4-bit index of MCS in the NB-IoT, and MCS indexes may be constructed by using the remaining 3 bits of this field. In this case, some of the MCS status may be selectively retained by comprehensively considering conditions of channel transmission and system resource occupancy, in order to construct a new correspondence relationship between MCSs and MCS indexes while reducing system resource consumption as much as possible. Optionally, the reduced bit may be the most significant bit (MSB) of the MCS index, and certainly may also be any bit of the MCS index. After acquiring the new correspondence table as shown in FIG. 17, a correspondence relationship between the at least one bit and the activation and/or deactivation of the SPS may be constructed to indicate the activation/deactivation of the SPS. For example, when the value of the bit is 0, it may correspond that the SPS is activated, and when the value of the bit is 1, it may correspond that the SPS is deactivated. FIG. 17 shows an optional implementation of the correspondence relationship between MCSs and MCS indexes. In practical applications, one or more MCS status may be arbitrarily selected according to actual conditions or various parameters, which is not limited herein.

In step S1502, whether the SPS is activated is determined according to the correspondence relationship between the value of the specific field in the DCI and the activation and/or deactivation of the SPS.

As described above, when the value of the specific field may be a specific value of a reserved field in the DCI, for example, when the value of the specific field is a specific value of a reserved field in the MCS index, whether the SPS is activated may be determined according to a correspondence relationship between any value of the MCS index from 11 to 15 and the activation/deactivation of the SPS.

When the reserved field in the DCI is a reserved field in a subcarrier indication called by uplinks, whether the SPS is activated may be determined according to a correspondence relationship between the specific value of the reserved field of the subcarrier indication in the DCI and the activation/deactivation of the SPS.

In addition, when the specific field is one or more redundant bits in the DCI, whether the SPS is activated may be determined according to a correspondence relationship between values of the redundant bits and the activation/deactivation of the SPS.

When a base station simultaneously uses one or more of the specific value of the reserved field and the redundant bits in the DCI to collectively indicate the activation/deactivation of the SPS, whether the SPS is activated may be comprehensively determined by using a combination of the above-mentioned various correspondence relationships, to further reduce the error rate of the indication.

Optionally, when the base station reduces at least one bit from a field indicating a modulation and coding scheme index in the DCI to use remaining bits of the field to represent the modulation and coding scheme index, and indicates whether the SPS is activated according to a correspondence relationship between the value of the at least one bit and the activation and/or deactivation of the SPS, a UE may determine whether the SPS is activated according to the correspondence relationship between the value of the at least one bit and the activation and/or deactivation of the SPS.

In another example of the present disclosure, when indicating the activation/deactivation of the SPS, the base station may comprehensively adopt at least any two of the DCI implicit indication methods in the first embodiment, the MAC CE indication method in the second embodiment, and the indication method with a value of a specific field in the DCI in the third embodiment described above to collectively indicate the activation/deactivation status of the SPS, to further reduce the error rate of indicating the activation/deactivation status of the SPS and improve the indication accuracy. Accordingly, the UE will judge the activation/deactivation of the SPS by integrating at least two of the above methods as well. For example, when indicating the activation and deactivation of the SPS by using any of the DCI implicit indication methods, specific one or more bits or fields in the DCI may be set to fixed values. Optionally, when indicating for the activation/deactivation status of the SPS, one or more of the reserved field of MCS, the reserved field of the subcarrier indication, the NPDCCH order indicator, or other bits or fields (such as, scheduling delay fields, resource allocation fields, number-of-repetition-times fields, etc.) may be set to fixed values (for example, all are set to 1) to reduce the error rate of the indication.

The method for determining activation of SPS according to the embodiment of the present disclosure may accurately and effectively determine and indicate activation and/or deactivation of the SPS in NB-IoT, thereby reducing signaling overhead and improving utilization efficiency of resources.

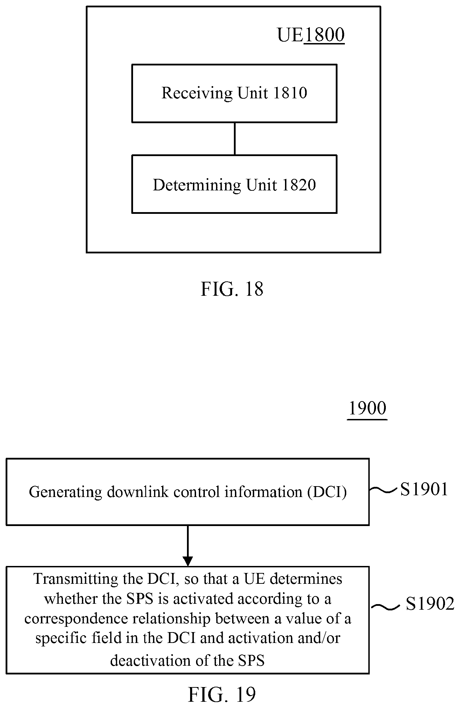

A UE according to an embodiment of the present disclosure will be described below with reference to FIG. 18. FIG. 18 shows a block diagram of the UE 1800 according to the embodiment of the present disclosure. As shown in FIG. 18, the UE 1800 comprises a receiving unit 1810 and a determining unit 1820. The UE 1800 may comprise other components in addition to these two units, however, since these components are not related to the content of the embodiments of the present disclosure, illustration and description thereof are omitted herein. Furthermore, since specific details of the following operations performed by the UE 1800 according to the embodiment of the present disclosure are the same as those described above with reference to FIGS. 15-17, repeated descriptions of the same details are omitted herein to avoid repetition.

The receiving unit 1810 in FIG. 18 receives downlink control information (DCI).

In the embodiment of the present disclosure, a base station may indicate whether the SPS is activated by a correspondence relationship between a value of a specific field in the DCI and activation and/or deactivation of the SPS.

Specifically, in an example of the present disclosure, the value of the specific field may be a specific value of a reserved field in the DCI. For example, the reserved field in the DCI may be a reserved field in an MCS index. FIG. 16 shows a correspondence relationship between MCSs and MCS indexes for an uplink SPS in the current NB-IoT. It can be seen that when the MCS index is 0-10 (i.e., 0000-1010), each MCS index corresponds to a modulation order and a TBS index; and when the MCS index is 11-15 (i.e., 1011-1111), there are reserved fields without corresponding modulation orders and TBS indexes. Therefore, any value of the MCS index from 11 to 15 may be corresponded to the activation/deactivation of the SPS. For example, the MCS index of 15 (i.e., 1111) may be selected to correspond to the deactivation of the SPS. Furthermore, after a field corresponding to the deactivation status of the SPS has been determined in any value of the MCS index from 11 to 15, all the MCS indexes of 0-10 corresponding to different modulation orders and TBS indexes respectively may be considered as corresponding to the activation status of the SPS. In addition, in a correspondence table of MCSs and MCS indexes for a downlink SPS, a reserved field may also be selected in a manner similar to that shown in FIG. 16 to correspond to the activation/deactivation status of the SPS.

In another example of the present disclosure, the reserved field in the DCI may also be a reserved field in a subcarrier indication in uplink transmission called by the DCI. A subcarrier indication field in the DCI may contain 6 bits and 64 status, among which only 48 status (the subcarrier frequency is 3.75 KHz) or 18 status (the subcarrier frequency is 15 KHz) are required in practical applications. Therefore, a specific value of a reserved field in the DCI subcarrier indication that has not been used may be used to indicate the activation/deactivation of the SPS. For example, a 6-bit value of 111111 may be used to indicate that the SPS is deactivated, while a 6-bit value of 111110 may be used to indicate that the SPS is activated.

In still another example of the present disclosure, the specific field may also be one or more redundant bits in the DCI. For example, an NPDCCH order indicator in downlink transmission called by the DCI is used to indicate how a Random Access Channel (RACH) is triggered during non-semi-persistent transmission. However, if it is semi-persistent scheduling currently, the NPDCCH order indicator does not need to indicate the status of the RACH, so it may be regarded as a redundant bit under the SPS. In this case, a correspondence relationship between the value of the NPDCCH order indicator and the activation/deactivation of the SPS may be established. For example, when the value of the NPDCCH order indicator is 0, it indicates that the SPS is activated; and when the value of the NPDCCH order indicator is 1, it indicates that the SPS is deactivated.

In yet another example of the present disclosure, one or more of the specific value of the reserved field and the redundant bits in the DCI described above may be simultaneously used to collectively indicate the activation/deactivation of the SPS. Optionally, all of the reserved field of MCS, the reserved field of the subcarrier indication, and the NPDCCH order indicator in the DCI may be defined as fixed values, for example, all bit values are set to 1. Further, specific one or more bits or fields in the DCI may be set to fixed values when the activation and the deactivation of the SPS needs to be indicated, for example, for the deactivation, one or more bits or fields (such as, scheduling delay fields, resource allocation fields, number-of-repetition-times fields, etc.) other than the reserved field of MCS, the reserved field of the subcarrier indication, and the NPDCCH order indicator are all set to fixed values (for example, all are set to 1) to reduce the error rate of the indication.

Optionally, the base station indicating whether the SPS is activated according to a correspondence relationship between a value of a specific field in the DCI and the activation and/or deactivation of the SPS may further comprise: reducing at least one bit from a field indicating a modulation and coding scheme index in the DCI, in order to use remaining bits of the field to represent the modulation and coding scheme index; indicating whether the SPS is activated according to a correspondence relationship between the value of the at least one bit and the activation and/or deactivation of the SPS. Specifically, as shown in FIG. 17, at least one bit may be reduced from a 4-bit index of MCS in the NB-IoT, and MCS indexes may be constructed by using the remaining 3 bits of this field. In this case, some of the MCS status may be selectively retained by comprehensively considering conditions of channel transmission and system resource occupancy, in order to construct a new correspondence relationship between MCSs and MCS indexes while reducing system resource consumption as much as possible. Optionally, the reduced bit may be the most significant bit (MSB) of the MCS index, and certainly may also be any bit of the MCS index. After acquiring the new correspondence table as shown in FIG. 17, a correspondence relationship between the at least one bit and the activation and/or deactivation of the SPS may be constructed to indicate the activation/deactivation of the SPS. For example, when the value of the bit is 0, it may correspond that the SPS is activated, and when the value of the bit is 1, it may correspond that the SPS is deactivated. FIG. 17 shows an optional implementation of the correspondence relationships between MCSs and MCS indexes. In practical applications, one or more MCS status may be arbitrarily selected according to actual conditions or various parameters, which is not limited herein.

The determining unit 1802 determines whether the SPS is activated according to the correspondence relationship between the value of the specific field in the DCI and the activation and/or deactivation of the SPS.

As described above, when the value of the specific field may be a specific value of a reserved field in the DCI, for example, when the value of the specific field is a specific value of a reserved field in the MCS index, the determining unit 1802 may determine whether the SPS is activated according to a correspondence relationship between any value of the MCS index from 11 to 15 and the activation/deactivation of the SPS.

When the reserved field in the DCI is a reserved field in a subcarrier indication called by uplinks, the determining unit 1802 may determine whether the SPS is activated according to a correspondence relationship between the specific value of the reserved field of the subcarrier indication in the DCI and the activation/deactivation of the SPS.

In addition, when the specific field is one or more redundant bits in the DCI, the determining unit 1802 may determine whether the SPS is activated according to a correspondence relationship between values of the redundant bits and the activation/deactivation of the SPS.

When the base station simultaneously uses one or more of the specific value of the reserved field and the redundant bits in the DCI to collectively indicate the activation/deactivation of the SPS, the determining unit 1802 may comprehensively determine whether the SPS is activated by using a combination of the above-mentioned various correspondence relationships, to further reduce the error rate of the indication.

Optionally, when the base station reduces at least one bit from a field indicating a modulation and coding scheme index in the DCI to use remaining bits of the field to represent the modulation and coding scheme index, and indicates whether the SPS is activated according to a correspondence relationship between the value of the at least one bit and the activation and/or deactivation of the SPS, the determining unit 1802 may determine whether the SPS is activated according to the correspondence relationship between the value of the at least one bit and the activation and/or deactivation of the SPS.

In another example of the present disclosure, when indicating the activation/deactivation of the SPS, the base station may comprehensively adopt at least any two of the DCI implicit indication methods in the first embodiment, the MAC CE indication method in the second embodiment, and the indication method with a value of a specific field in the DCI in the third embodiment described above to collectively indicate the activation/deactivation status of the SPS, to further reduce the error rate of indicating the activation/deactivation status of the SPS and improve the indication accuracy. Accordingly, the UE will judge the activation/deactivation of the SPS by integrating at least two of the above methods as well. For example, when indicating the activation and deactivation of the SPS by using any of the DCI implicit indication methods, specific one or more bits or fields in the DCI may be set to fixed values. Optionally, when indicating for the activation/deactivation status of the SPS, one or more of the reserved field of MCS, the reserved field of the subcarrier indication, the NPDCCH order indicator, or other bits or fields (such as, scheduling delay fields, resource allocation fields, number-of-repetition-times fields, etc.) may be set to fixed values (for example, all are set to 1) to reduce the error rate of the indication.

The UE according to the embodiment of the present disclosure may accurately and effectively determine and indicate activation and/or deactivation of SPS in NB-IoT, thereby reducing signaling overhead and improving utilization efficiency of resources.

A method for indicating activation of SPS performed by a base station according to an embodiment of the present disclosure will be described below with reference to FIG. 19. FIG. 19 shows a flowchart of the method 1900 for indicating activation of the SPS.

As shown in FIG. 19, in step S1901, downlink control information (DCI) is generated.

In the embodiment of the present disclosure, the base station may indicate whether the SPS is activated by a correspondence relationship between a value of a specific field in the DCI and activation and/or deactivation of the SPS.

Specifically, in an example of the present disclosure, the value of the specific field may be a specific value of a reserved field in the DCI. For example, the reserved field in the DCI may be a reserved field in an MCS index. FIG. 16 shows a correspondence relationship between MCSs and MCS indexes for an uplink SPS in the current NB-IoT. It can be seen that when the MCS index is 0-10 (i.e., 0000-1010), each MCS index corresponds to a modulation order and a TBS index; and when the MCS index is 11-15 (i.e., 1011-1111), there are reserved fields without corresponding modulation orders and TBS indexes. Therefore, any value of the MCS index from 11 to 15 may be corresponded to the activation/deactivation of the SPS. For example, the MCS index of 15 (i.e., 1111) may be selected to correspond to the deactivation of the SPS. Furthermore, after a field corresponding to the deactivation status of the SPS has been determined in any value of the MCS index from 11 to 15, all the MCS indexes of 0-10 corresponding to different modulation orders and TBS indexes respectively may be considered as corresponding to the activation status of the SPS. In addition, in a correspondence table of MCSs and MCS indexes for a downlink SPS, a reserved field may also be selected in a manner similar to that shown in FIG. 16 to correspond to the activation/deactivation status of the SPS.

In another example of the present disclosure, the reserved field in the DCI may also be a reserved field in a subcarrier indication in uplink transmission called by the DCI. A subcarrier indication field in the DCI may contain 6 bits and 64 status, among which only 48 status (the subcarrier frequency is 3.75 KHz) or 18 status (the subcarrier frequency is 15 KHz) are required in practical applications. Therefore, a specific value of a reserved field in the DCI subcarrier indication that has not been used may be used to indicate the activation/deactivation of the SPS. For example, a 6-bit value of 111111 may be used to indicate that the SPS is deactivated, while a 6-bit value of 111110 may be used to indicate that the SPS is activated.

In still another example of the present disclosure, the specific field may also be one or more redundant bits in the DCI. For example, an NPDCCH order indicator in downlink transmission called by the DCI is used to indicate how a Random Access Channel (RACH) is triggered during non-semi-persistent transmission. However, if it is semi-persistent scheduling currently, the NPDCCH order indicator does not need to indicate the status of the RACH, so it may be regarded as a redundant bit under the SPS. In this case, a correspondence relationship between the value of the NPDCCH order indicator and the activation/deactivation of the SPS may be established. For example, when the value of the NPDCCH order indicator is 0, it indicates that the SPS is activated; and when the value of the NPDCCH order indicator is 1, it indicates that the SPS is deactivated.

In yet another example of the present disclosure, one or more of the specific value of the reserved field and the redundant bits in the DCI described above may be simultaneously used to collectively indicate the activation/deactivation of the SPS. Optionally, all of the reserved field of MCS, the reserved field of the subcarrier indication, and the NPDCCH order indicator in the DCI may be defined as fixed values, for example, all bit values are set to 1. Further, specific one or more bits or fields in the DCI may be set to fixed values when the activation and the deactivation of the SPS needs to be indicated, for example, for the deactivation, one or more bits or fields (such as, scheduling delay fields, resource allocation fields, number-of-repetition-times fields, etc.) other than the reserved field of MCS, the reserved field of the subcarrier indication, and the NPDCCH order indicator are all set to fixed values (for example, all are set to 1) to reduce the error rate of the indication.

Optionally, indicating whether the SPS is activated according to a correspondence relationship between a value of a specific field in the DCI and the activation and/or deactivation of the SPS may further comprise: reducing at least one bit from a field indicating a modulation and coding scheme index in the DCI, in order to use remaining bits of the field to represent the modulation and coding scheme index; indicating whether the SPS is activated according to a correspondence relationship between the value of the at least one bit and the activation and/or deactivation of the SPS. Specifically, as shown in FIG. 17, at least one bit may be reduced from a 4-bit index of MCS in the NB-IoT, and MCS indexes may be constructed by using the remaining 3 bits of this field. In this case, some of the MCS status may be selectively retained by comprehensively considering conditions of channel transmission and system resource occupancy, in order to construct a new correspondence relationship between MCSs and MCS indexes while reducing system resource consumption as much as possible. Optionally, the reduced bit may be the most significant bit (MSB) of the MCS index, and certainly may also be any bit of the MCS index. After acquiring the new correspondence table as shown in FIG. 17, a correspondence relationship between the at least one bit and the activation and/or deactivation of the SPS may be constructed to indicate the activation/deactivation of the SPS. For example, when the value of the bit is 0, it may correspond that the SPS is activated, and when the value of the bit is 1, it may correspond that the SPS is deactivated. FIG. 17 shows an optional implementation of the correspondence relationship between MCSs and MCS indexes. In practical applications, one or more MCS status may be arbitrarily selected according to actual conditions or various parameters, which is not limited herein.

In step S1902, the DCI is transmitted, so that a UE determines whether the SPS is activated according to the correspondence relationship between the value of the specific field in the DCI and the activation and/or deactivation of the SPS.

As described above, when the value of the specific field may be a specific value of a reserved field in the DCI, for example, when the value of the specific field is a specific value of a reserved field in the MCS index, the UE may determine whether the SPS is activated according to a correspondence relationship between any value of the MCS index from 11 to 15 and the activation/deactivation of the SPS.

When the reserved field in the DCI is a reserved field in a subcarrier indication called by uplinks, the UE may determine whether the SPS is activated according to a correspondence relationship between the specific value of the reserved field of the subcarrier indication in the DCI and the activation/deactivation of the SPS.

In addition, when the specific field is one or more redundant bits in the DCI, the UE may determine whether the SPS is activated according to a correspondence relationship between values of the redundant bits and the activation/deactivation of the SPS.

When the base station simultaneously uses one or more of the specific value of the reserved field and the redundant bits in the DCI to collectively indicate the activation/deactivation of the SPS, the UE may comprehensively determine whether the SPS is activated by using a combination of the above-mentioned various correspondence relationships, to further reduce the error rate of the indication.

Optionally, when the base station reduces at least one bit from a field indicating a modulation and coding scheme index in the DCI to use remaining bits of the field to represent the modulation and coding scheme index, and indicates whether the SPS is activated according to a correspondence relationship between the value of the at least one bit and the activation and/or deactivation of the SPS, the UE may determine whether the SPS is activated according to the correspondence relationship between the value of the at least one bit and the activation and/or deactivation of the SPS.

In another example of the present disclosure, when indicating the activation/deactivation of the SPS, the base station may comprehensively adopt at least any two of the DCI implicit indication methods in the first embodiment, the MAC CE indication method in the second embodiment, and the indication method with a value of a specific field in the DCI in the third embodiment described above to collectively indicate the activation/deactivation status of the SPS, to further reduce the error rate of indicating the activation/deactivation status of the SPS and improve the indication accuracy. Accordingly, the UE will judge the activation/deactivation of the SPS by integrating at least two of the above methods as well. For example, when indicating the activation and deactivation of the SPS by using any of the DCI implicit indication methods, specific one or more bits or fields in the DCI may be set to fixed values. Optionally, when indicating for the activation/deactivation status of the SPS, one or more of the reserved field of MCS, the reserved field of the subcarrier indication, the NPDCCH order indicator, or other bits or fields (such as, scheduling delay fields, resource allocation fields, number-of-repetition-times fields, etc.) may be set to fixed values (for example, all are set to 1) to reduce the error rate of the indication.

The method for indicating activation of SPS according to the embodiment of the present disclosure may accurately and effectively determine and indicate activation and/or deactivation of the SPS in NB-IoT, thereby reducing signaling overhead and improving utilization efficiency of resources.

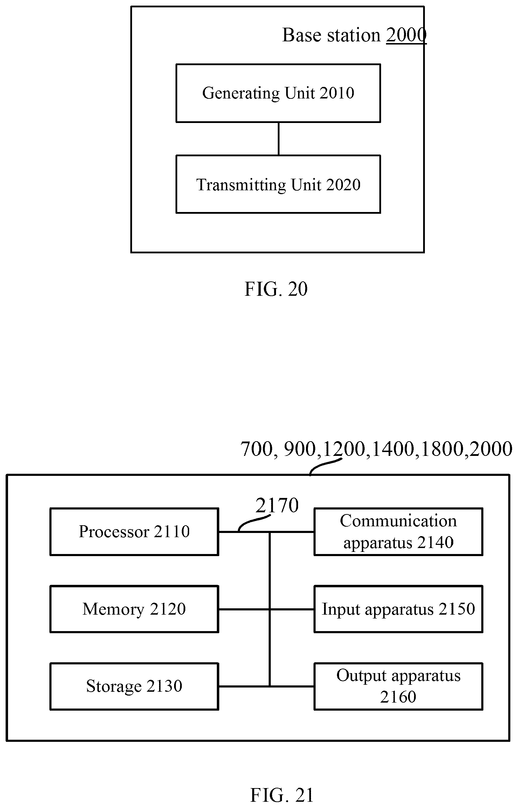

A base station according to an embodiment of the present disclosure will be described below with reference to FIG. 20. FIG. 20 shows a block diagram of the base station 2000 according to the embodiment of the present disclosure. As shown in FIG. 20, the base station 2000 comprises a generating unit 2010 and a transmitting unit 2020. The base station 2000 may comprise other components in addition to these two units, however, since these components are not related to the content of the embodiments of the present disclosure, illustration and description thereof are omitted herein. Furthermore, since specific details of the following operations performed by the base station 2000 according to the embodiment of the present disclosure are the same as those described above with reference to FIG. 19, repeated descriptions of the same details are omitted herein to avoid repetition.

The generating unit 2010 in FIG. 20 is configured to generate downlink control information (DCI).

In the embodiment of the present disclosure, the base station may indicate whether the SPS is activated by a correspondence relationship between a value of a specific field in the DCI and activation and/or deactivation of the SPS.

Specifically, in an example of the present disclosure, the value of the specific field may be a specific value of a reserved field in the DCI. For example, the reserved field in the DCI may be a reserved field in an MCS index. FIG. 16 shows a correspondence relationship between MCSs and MCS indexes for an uplink SPS in the current NB-IoT. It can be seen that when the MCS index is 0-10 (i.e., 0000-1010), each MCS index corresponds to a modulation order and a TBS index; and when the MCS index is 11-15 (i.e., 1011-1111), there are reserved fields without corresponding modulation orders and TBS indexes. Therefore, any value of the MCS index from 11 to 15 may be corresponded to the activation/deactivation of the SPS. For example, the MCS index of 15 (i.e., 1111) may be selected to correspond to the deactivation of the SPS. Furthermore, after a field corresponding to the deactivation status of the SPS has been determined in any value of the MCS index from 11 to 15, all the MCS indexes of 0-10 corresponding to different modulation orders and TBS indexes respectively may be considered as corresponding to the activation status of the SPS. In addition, in a correspondence table of MCSs and MCS indexes for a downlink SPS, a reserved field may also be selected in a manner similar to that shown in FIG. 16 to correspond to the activation/deactivation status of the SPS.

In another example of the present disclosure, the reserved field in the DCI may also be a reserved field in a subcarrier indication in uplink transmission called by the DCI. A subcarrier indication field in the DCI may contain 6 bits and 64 status, among which only 48 status (the subcarrier frequency is 3.75 KHz) or 18 status (the subcarrier frequency is 15 KHz) are required in practical applications. Therefore, a specific value of a reserved field in the DCI subcarrier indication that has not been used may be used to indicate the activation/deactivation of the SPS. For example, a 6-bit value of 111111 may be used to indicate that the SPS is deactivated, while a 6-bit value of 111110 may be used to indicate that the SPS is activated.

In still another example of the present disclosure, the specific field may also be one or more redundant bits in the DCI. For example, an NPDCCH order indicator in downlink transmission called by the DCI is used to indicate how a Random Access Channel (RACH) is triggered during non-semi-persistent transmission. However, if it is semi-persistent scheduling currently, the NPDCCH order indicator does not need to indicate the status of the RACH, so it may be regarded as a redundant bit under the SPS. In this case, a correspondence relationship between the value of the NPDCCH order indicator and the activation/deactivation of the SPS may be established. For example, when the value of the NPDCCH order indicator is 0, it indicates that the SPS is activated; and when the value of the NPDCCH order indicator is 1, it indicates that the SPS is deactivated.

In yet another example of the present disclosure, one or more of the specific value of the reserved field and the redundant bits in the DCI described above may be simultaneously used to collectively indicate the activation/deactivation of the SPS. Optionally, all of the reserved field of MCS, the reserved field of the subcarrier indication, and the NPDCCH order indicator in the DCI may be defined as fixed values, for example, all bit values are set to 1. Further, specific one or more bits or fields in the DCI may be set to fixed values when the activation and the deactivation of the SPS needs to be indicated, for example, for the deactivation, one or more bits or fields (such as, scheduling delay fields, resource allocation fields, number-of-repetition-times fields, etc.) other than the reserved field of MCS, the reserved field of the subcarrier indication, and the NPDCCH order indicator are all set to fixed values (for example, all are set to 1) to reduce the error rate of the indication.

Optionally, the base station indicating whether the SPS is activated according to a correspondence relationship between a value of a specific field in the DCI and the activation and/or deactivation of the SPS may further comprise: reducing at least one bit from a field indicating a modulation and coding scheme index in the DCI, in order to use remaining bits of the field to represent the modulation and coding scheme index; indicating whether the SPS is activated according to a correspondence relationship between the value of the at least one bit and the activation and/or deactivation of the SPS. Specifically, as shown in FIG. 17, at least one bit may be reduced from a 4-bit index of MCS in the NB-IoT, and MCS indexes may be constructed using the remaining 3 bits of this field. In this case, some of the MCS status may be selectively retained by comprehensively considering conditions of channel transmission and system resource occupancy, in order to construct a new correspondence relationship between MCSs and MCS indexes while reducing system resource consumption as much as possible. Optionally, the reduced bit may be the most significant bit (MSB) of the MCS index, and certainly may also be any bit of the MCS index. After acquiring the new correspondence table as shown in FIG. 17, a correspondence relationship between the at least one bit and the activation and/or deactivation of the SPS may be constructed to indicate the activation/deactivation of the SPS. For example, when the value of the bit is 0, it may correspond that the SPS is activated, and when the value of the bit is 1, it may correspond that the SPS is deactivated. FIG. 17 shows an optional implementation of the correspondence relationships between MCSs and MCS indexes. In practical applications, one or more MCS status may be arbitrarily selected according to actual conditions or various parameters, which is not limited herein.

The transmitting unit 2020 is configured to transmit the DCI, so that a UE determines whether the SPS is activated according to the correspondence relationship between the value of the specific field in the DCI and the activation and/or deactivation of the SPS.

As described above, the transmitting unit 2020 transmits the DCI, so that the UE determines the activation/deactivation status of the SPS. Specifically, when the value of the specific field may be a specific value of a reserved field in the DCI, for example, when the value of the specific field is a specific value of a reserved field in the MCS index, the UE may determine whether the SPS is activated according to a correspondence relationship between any value of the MCS index from 11 to 15 and the activation/deactivation of the SPS.

When the reserved field in the DCI is a reserved field in a subcarrier indication called by uplinks, the UE may determine whether the SPS is activated according to a correspondence relationship between the specific value of the reserved field of the subcarrier indication in the DCI and the activation/deactivation of the SPS.

In addition, when the specific field is one or more redundant bits in the DCI, the UE may determine whether the SPS is activated according to a correspondence relationship between values of the redundant bits and the activation/deactivation of the SPS.

When the base station simultaneously uses one or more of the specific value of the reserved field and the redundant bits in the DCI to collectively indicate the activation/deactivation of the SPS, the UE may comprehensively determine whether the SPS is activated by using a combination of the above-mentioned various correspondence relationships, to further reduce the error rate of the indication.

Optionally, when the base station reduces at least one bit from a field indicating a modulation and coding scheme index in the DCI to use remaining bits of the field to represent the modulation and coding scheme index, and indicates whether the SPS is activated according to a correspondence relationship between the value of the at least one bit and the activation and/or deactivation of the SPS, the UE may determine whether the SPS is activated according to the correspondence relationship between the value of the at least one bit and the activation and/or deactivation of the SPS.

In another example of the present disclosure, when indicating the activation/deactivation of the SPS, the base station may comprehensively adopt at least any two of the DCI implicit indication methods in the first embodiment, the MAC CE indication method in the second embodiment, and the indication method with a value of a specific field in the DCI in the third embodiment described above to collectively indicate the activation/deactivation status of the SPS, to further reduce the error rate of indicating the activation/deactivation status of the SPS and improve the indication accuracy. Accordingly, the UE will judge the activation/deactivation of the SPS by integrating at least two of the above methods as well. For example, when indicating the activation and deactivation of the SPS by using any of the DCI implicit indication methods, specific one or more bits or fields in the DCI may be set to fixed values. Optionally, when indicating for the activation/deactivation status of the SPS, one or more of the reserved field of MCS, the reserved field of the subcarrier indication, the NPDCCH order indicator, or other bits or fields (such as, scheduling delay fields, resource allocation fields, number-of-repetition-times fields, etc.) may be set to fixed values (for example, all are set to 1) to reduce the error rate of the indication.

The base station according to the embodiment of the present disclosure may accurately and effectively determine and indicate activation and/or deactivation of SPS in NB-IoT, thereby reducing signaling overhead and improving utilization efficiency of resources.

In addition, block diagrams used in the description of the above embodiments illustrate blocks in units of functions. These functional blocks (structural blocks) may be implemented in arbitrary combination of hardware and/or software. Furthermore, means for implementing respective functional blocks is not particularly limited. That is, the respective functional blocks may be implemented by one apparatus that is physically and/or logically jointed; or more than two apparatuses that are physically and/or logically separated may be directly and/or indirectly (e.g., wiredly and/or wirelessly) connected, and the respective functional blocks may be implemented by these apparatuses.

For example, the base station, the user equipment and the like in one embodiment of the present disclosure may function as a computer that executes the method for determining or indicating activation of SPS of the present disclosure. FIG. 21 is a diagram illustrating an example of a hardware structure of the base stations and the user equipment involved in one embodiment of the present disclosure. The UE and the base station described above may be constituted as a computer apparatus that physically comprises a processor 2110, a memory 2120, a storage 2130, a communication apparatus 2140, an input apparatus 2150, an output apparatus 2160, a bus 2170 and the like

In addition, in the following description, terms such as "apparatus" may be replaced with circuits, devices, units, and the like. The hardware structure of the UE and the base station may include one or more of the respective apparatuses shown in the figure, or may not include a part of the apparatuses.

For example, only one processor 2110 is illustrated, but there may be multiple processors. Furthermore, processes may be performed by one processor, or processes may be performed by more than one processor simultaneously, sequentially, or by other methods. In addition, the processor 2110 may be installed by more than one chip.

Respective functions of the UE and the base station may be implemented, for example, by reading specified software (program) on hardware such as the processor 2110 and the memory 2120, so that the processor 2110 performs computations, controls communication performed by the communication apparatus 2140, and controls reading and/or writing of data in the memory 2120 and the storage 2130.

The processor 2110, for example, operates an operating system to control the entire computer. The processor 2110 may be constituted by a Central Processing Unit (CPU), which includes interfaces with peripheral apparatuses, a control apparatus, a computing apparatus, a register and the like.

In addition, the processor 2110 reads programs (program codes), software modules and data from the storage 2130 and/or the communication apparatus 2140 to the memory 2120, and execute various processes according to them. As for the program, a program causing computers to execute at least a part of the operations described in the above embodiments may be employed.

The memory 2120 is a computer-readable recording medium, and may be constituted, for example, by at least one of a Read Only Memory (ROM), an Erasable Programmable ROM (EPROM), an Electrically EPROM (EEPROM), a Random Access Memory (RAM) and other appropriate storage media. The memory 2120 may also be referred to as a register, a cache, a main memory (a main storage apparatus) and the like. The memory 2120 may store executable programs (program codes), software modules or the like for implementing the resource scheduling method involved in one embodiment of the present disclosure.

The storage 2130 is a computer-readable recording medium, and may be constituted, for example, by at least one of a flexible disk, a floppy^{®} disk, a magneto-optical disk (e.g., a Compact Disc ROM (CD-ROM) and the like), a digital versatile disk, a Blu-ray^{®} disk, a removable disk, a hard driver, a smart card, a flash memory device (e.g., a card, a stick and a key driver), a magnetic stripe, a database, a server, and other appropriate storage media. The storage 2130 may also be referred to as an auxiliary storage apparatus.

The communication apparatus 2140 is a hardware (transceiver device) performing communication between computers via a wired and/or wireless network, and is also referred to as a network device, a network controller, a network card, a communication module or the like, for example. The communication apparatus 2140 may include a high-frequency switch, a duplexer, a filter, a frequency synthesizer and the like to implement, for example, Frequency Division Duplex (FDD) and/or Time Division Duplex (TDD).

The input apparatus 2150 is an input device (e.g., a keyboard, a mouse, a microphone, a switch, a button, a sensor and the like) that receives input from the outside. The output apparatus 2160 is an output device (e.g., a display, a speaker, a Light Emitting Diode (LED) light and the like) that performs outputting to the outside. In addition, the input apparatus 2150 and the output apparatus 2160 may also be an integrated structure (e.g., a touch screen).

Furthermore, the respective apparatuses such as the processor 2110 and the memory 2120 are connected by the bus 2170 that communicates information. The bus 2170 may be constituted by a single bus or by different buses between the apparatuses.

Furthermore, the UE and the base station may comprise hardware such as a microprocessor, a Digital Signal Processor (DSP), an Application Specified Integrated Circuit (ASIC), a Programmable Logic Device (PLD), a Field Programmable Gate Array (FPGA), etc., and the hardware may be used to implement a part of or all of the respective functional blocks. For example, the processor 2110 may be installed by at least one of the hardware.

The terms illustrated in the present specification and/or the terms required for understanding of the present specification may be substituted with terms having the same or similar meaning. For example, a channel and/or a symbol may also be a signal (signaling). Furthermore, the signal may be a message. A reference signal may be abbreviated as an "RS", and may also be referred to as a "pilot", a "pilot signal" and so on, depending on the standard applied. Furthermore, a component carrier (CC) may also be referred to as a cell, a frequency carrier, a carrier frequency, and the like.

In addition, a radio frame may be composed of one or more periods (frames) in the time domain. Each of the one or more periods (frames) constituting the radio frame may also be referred to as a subframe. Further, a subframe may be composed of one or more slots in the time domain. The subframe may be a fixed length of time duration (e.g., 1 ms) that is independent of the numerology.

Furthermore, a slot may be composed of one or more symbols (OFDM (Orthogonal Frequency Division Multiplexing) symbols, SC-FDMA (Single Carrier Frequency Division Multiple Access) symbols, etc.) in the time domain. Furthermore, the slot may also be a time unit based on the numerology. Furthermore, the slot may also include a plurality of microslots. Each microslot may be composed of one or more symbols in the time domain. Furthermore, a microslot may also be referred to as a "subframe".

A radio frame, a subframe, a slot, a microslot and a symbol all represent a time unit during signal transmission. A radio frame, a subframe, a slot, a microslot and a symbol may also use other names that correspond to thereof, respectively. For example, one subframe may be referred to as a "transmission time interval (TTI)", and a plurality of consecutive subframes may also be referred to as a "TTI", and one slot or one microslot may also be referred to as a "TTI." That is, a subframe and/or a TTI may be a subframe (1 ms) in the existing LTE, may be a period of time shorter than 1 ms (e.g., 1 to 13 symbols), or may be a period of time longer than 1 ms. In addition, a unit indicating a TTI may also be referred to as a slot, a microslot and the like instead of a subframe.

Herein, a TTI refers to the minimum time unit of scheduling in wireless communication, for example. For example, in LTE systems, a wireless base station performs scheduling for respective user terminals that allocates radio resources (such as frequency bandwidths and transmission power that can be used in respective user terminals) in units of TTI. In addition, the definition of the TTI is not limited thereto.

The TTI may be a transmission time unit of channel-coded data packets (transport blocks), code blocks, and/or codewords, or may be a processing unit of scheduling, link adaptation and so on. In addition, when the TTI is given, a time interval (e.g., the number of symbols) mapped to transport blocks, code blocks, and/or codewords actually may also be shorter than the TTI.

In addition, when one slot or one microslot is called a TTI, more than one TTI (i.e., more than one slot or more than one microslot) may also become the minimum time unit of scheduling. Furthermore, the number of slots (the number of microslots) constituting the minimum time unit of the scheduling may be controlled.

A TTI having a time duration of 1 ms may also be referred to as a normal TTI (TTI in LTE Rel. 8-12), a standard TTI, a long TTI, a normal subframe, a standard subframe, or a long subframe, and so on. A TTI that is shorter than a normal TTI may also be referred to as a compressed TTI, a short TTI, a partial (or fractional) TTI, a compressed subframe, a short subframe, a microslot, a subslot, and so on.

In addition, a long TTI (e.g., a normal TTI, a subframe, etc.) may also be replaced with a TTI having a time duration exceeding 1 ms, and a short TTI (e.g., a compressed TTI, etc.) may also be replaced with a TTI having a TTI duration shorter than the long TTI and longer than 1 ms.

A resource block (RB) is a resource allocation unit in the time domain and the frequency domain, and may include one or more consecutive subcarriers in the frequency domain. Also, an RB may include one or more symbols in the time domain, and may be one slot, one microslot, one subframe or one TTI duration. One TTI and one subframe may be composed of one or more resource blocks, respectively. In addition, one or more RBs may also be referred to as "physical resource blocks (PRBs (Physical RBs))", "Sub-Carrier Groups (SCGs)", "Resource Element Groups (REGs)", "PRG pairs", "RB pairs" and so on.

Furthermore, a resource block may also be composed of one or more resource elements (REs). For example, one RE may be a radio resource area of one subcarrier and one symbol.

In addition, structures of the radio frames, subframes, slots, microslots and symbols, etc. described above are simply examples. For example, configurations such as the number of subframes included in a radio frame, the number of slots of each subframe or radio frame, the number or microslots included in a slot, the number of symbols and RBs included in a slot or microslot, the number of subcarriers included in an RB, the number of symbols in a TTI, the symbol duration and the cyclic prefix (CP) duration may be variously altered.

Furthermore, the information, parameters and so on described in this specification may be represented in absolute values or in relative values with respect to specified values, or may be represented by other corresponding information. For example, radio resources may be indicated by specified indices. Furthermore, equations and the like using these parameters may be different from those explicitly disclosed in this specification.

The names used for the parameters and the like in this specification are not limited in any respect. For example, since various channels (PUCCHs (Physical Uplink Control Channels), PDCCHs (Physical Downlink Control Channels), etc.) and information elements may be identified by any suitable names, the various names assigned to these various channels and information elements are not limitative in any respect.

The information, signals and the like described in this specification may be represented by using any one of various different technologies. For example, data, instructions, commands, information, signals, bits, symbols, chips, etc. possibly referenced throughout the above description may be represented by voltages, currents, electromagnetic waves, magnetic fields or particles, optical fields or photons, or any combination thereof.

In addition, information, signals and the like may be output from higher layers to lower layers and/or from lower layers to higher layers. Information, signals and the like may be input or output via a plurality of network nodes.

The information, signals and the like that are input or output may be stored in a specific location (for example, in a memory), or may be managed in a control table. The information, signals and the like that are input or output may be overwritten, updated or appended. The information, signals and the like that are output may be deleted. The information, signals and the like that are input may be transmitted to other apparatuses.

Reporting of information is by no means limited to the manners/embodiments described in this specification, and may be implemented by other methods as well. For example, reporting of information may be implemented by using physical layer signaling (for example, downlink control information (DCI), uplink control information (UCI)), higher layer signaling (for example, RRC (Radio Resource Control) signaling, broadcast information (master information blocks (MIBs), system information blocks (SIBs), etc.), MAC (Medium Access Control) signaling), other signals or combinations thereof.

In addition, physical layer signaling may also be referred to as L1/L2 (Layer 1/Layer 2) control information (L1/L2 control signals), L1 control information (LI control signal) and the like. Furthermore, RRC signaling may also be referred to as "RRC messages", for example, RRC connection setup messages, RRC connection reconfiguration messages, and so on. Furthermore, MAC signaling may be reported by using, for example, MAC control elements (MAC CEs).

Furthermore, notification of prescribed information (for example, notification of "being X") is not limited to being performed explicitly, and may be performed implicitly (for example, by not performing notification of the prescribed information or by notification of other information).

Decision may be performed by a value (0 or 1) represented by 1 bit, or by a true or false value (boolean value) represented by TRUE or FALSE, or by a numerical comparison (e.g., comparison with a prescribed value).

Software, whether referred to as "software", "firmware", "middleware", "microcode" or "hardware description language", or called by other names, should be interpreted broadly to mean instructions, instruction sets, code, code segments, program codes, programs, subprograms, software modules, applications, software applications, software packages, routines, subroutines, objects, executable files, execution threads, procedures, functions and so on.

In addition, software, commands, information, etc. may be transmitted and received via a transport medium. For example, when software is transmitted from web pages, servers or other remote sources using wired technologies (coaxial cables, fibers, twisted pairs, Digital Subscriber Lines (DSLs), etc.) and/or wireless technologies (infrared ray, microwave, etc.), these wired technologies and/or wireless technologies are included in the definition of the transport medium.

The terms "system" and "network" used in this specification are used interchangeably.

In this specification, terms like "Base Station (BS)", "wireless base station", "eNB", "gNB", "cell", "sector", "cell group", "carrier" and "component carrier" may be used interchangeably. The base station is sometimes referred to as terms such as a fixed station, a NodeB, an eNodeB (eNB), an access point, a transmitting point, a receiving point, a femto cell, a small cell, etc.

A base station is capable of accommodating one or more (for example, three) cells (also referred to as sectors). In a case where the base station accommodates a plurality of cells, the entire coverage area of the base station may be divided into a plurality of smaller areas, and each smaller area may provide communication services by using a base station sub-system (for example, a small base station for indoor use (a Remote Radio Head (RRH)). Terms like "cell" and "sector" refer to a part of or an entirety of the coverage area of a base station and/or a sub-system of the base station that provides communication services in this coverage.

In this specification, terms such as "Mobile Station (MS)", "user terminal", "User Equipment (UE)", and "terminal" may be used interchangeably. The base station is sometimes referred to as terms such as a fixed station, a NodeB, an eNodeB (eNB), an access point, a transmitting point, a receiving point, a femto cell, a small cell, etc.

The mobile station is sometimes referred by those skilled in the art as a user station, a mobile unit, a user unit, a wireless unit, a remote unit, a mobile device, a wireless device, a wireless communication device, a remote device, a mobile user station, an access terminal, a mobile terminal, a wireless terminal, a remote terminal, a handset, a user agent, a mobile client, a client, or some other appropriate terms.

Furthermore, the wireless base station in this specification may also be replaced with a user terminal. For example, for a structure in which communication between a wireless base station and a user terminal is replaced with communication between a plurality of user terminals (Device-to-Device, D2D), respective manners/embodiments of the present disclosure may be applied. At this time, functions provided by the wireless base station described above may be regarded as functions provided by the user terminals. Furthermore, the words "uplink" and "downlink" may also be replaced with "side". For example, an uplink channel may be replaced with a side channel.

Also, the UE in this specification may be replaced with a base station. At this time, functions provided by the above UE may be regarded as functions provided by the base station.

In this specification, specific actions configured to be performed by the base station sometimes may be performed by its upper nodes in certain cases. Obviously, in a network composed of one or more network nodes having base stations, various actions performed for communication with terminals may be performed by the base stations, one or more network nodes other than the base stations (for example, Mobility Management Entities (MMEs), Serving-Gateways (S-GWs), etc., may be considered, but not limited thereto)), or combinations thereof.

The respective manners/embodiments described in this specification may be used individually or in combinations, and may also be switched and used during execution. In addition, orders of processes, sequences, flow charts and so on of the respective manners/embodiments described in this specification may be re-ordered as long as there is no inconsistency. For example, although various methods have been described in this specification with various units of steps in exemplary orders, the specific orders as described are by no means limitative.

The manners/embodiments described in this specification may be applied to systems that utilize LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (New Radio Access Technology), NR (New Radio), NX (New radio access), FX (Future generation radio access), GSM^{®} (Global System for Mobile communications), CDMA 2000, UMB (Ultra Mobile Broadband), IEEE 802.11 (Wi-Fi^{®}), IEEE 802.16 (WiMAX^{®}), IEEE 802.20, UWB (Ultra-WideBand), Bluetooth^{®} and other appropriate wireless communication methods, and/or next-generation systems that are enhanced based on them.

Terms such as "based on" as used in this specification do not mean "based on only", unless otherwise specified in other paragraphs. In other words, terms such as "based on" mean both "based on only" and "at least based on."

Any reference to units with designations such as "first", "second" and so on as used in this specification does not generally limit the quantity or order of these units. These designations may be used in this specification as a convenient method for distinguishing between two or more units. Therefore, reference to a first unit and a second unit does not imply that only two units may be employed, or that the first unit must precedes the second unit in several ways.

Terms such as "deciding (determining)" as used in this specification may encompass a wide variety of actions. The "deciding (determining)" may regard, for example, calculating, computing, processing, deriving, investigating, looking up (e.g., looking up in a table, a database or other data structures), ascertaining, etc. as performing the "deciding (determining)". In addition, the "deciding (determining)" may also regard receiving (e.g., receiving information), transmitting (e.g., transmitting information), inputting, outputting accessing (e.g., accessing data in a memory), etc. as performing the "deciding (determining)". In addition, the "deciding (determining)" may further regard resolving, selecting, choosing, establishing, comparing, etc. as performing the "deciding (determining)". That is to say, the "deciding (determining)" may regard certain actions as performing the "deciding (determining)".

As used herein, terms such as "connected", "coupled", or any variation thereof mean any direct or indirect connection or coupling between two or more units, and may include the presence of one or more intermediate units between two units that are "connected" or "coupled" to each other. Coupling or connection between the units may be physical, logical or a combination thereof. For example, "connection" may be replaced with "access." As used in this specification, two units may be considered as being "connected" or "coupled" to each other by using one or more electrical wires, cables and/or printed electrical connections, and, as a number of non-limiting and non-inclusive examples, by using electromagnetic energy having wavelengths in the radio frequency region, microwave region and/or optical (both visible and invisible) region.

When terms such as "including", "comprising" and variations thereof are used in this specification or the claims, these terms, similar to the term "having", are also intended to be inclusive. Furthermore, the term "or" as used in this specification or the claims is not an exclusive or.

## Claims

1. A terminal, comprising:
a receiving unit (710,1810) configured to receive downlink control information, DCl, by using a narrowband downlink control channel;
a determining unit (720,1820) configured to determine activation or deactivation of semi-persistent scheduling, SPS, based on a correspondence relationship between a value of a modulation and coding scheme, MCS, field in the DCI and the activation or deactivation of the SPS,
wherein the determining unit further determines the deactivation of the SPS, based on a value of a number-of-repetition-times field and a value of a subcarrier indication field.

2. The terminal of claim 1, wherein:
the value of the MCS field corresponding to the deactivation of the SPS in the DCI is a specific value of a reserved field.

3. A radio communication method for a terminal, comprising:
receiving downlink control information, DCl, by using a narrowband downlink control channel;
determining activation or deactivation of semi-persistent scheduling, SPS, based on a correspondence relationship between a value of a modulation and coding scheme, MCS, field in the DCI and the activation or deactivation of the SPS, wherein the deactivation of the SPS is further determined based on a value of a number-of-repetition-times field and a value of a subcarrier indication field.

4. A base station, comprising:
a generating unit configured to generate downlink control information, DCl, including a value of a modulation and coding scheme, MCS, field corresponding to activation or deactivation of semi-persistent scheduling, SPS; and
a transmitting unit configured to transmit the DCI by using a narrowband downlink control channel,
wherein the generating unit further generates the DCI including a value of a number-of-repetition-times field and a value of a subcarrier indication field which correspond to the deactivation of the SPS.

5. A system comprising a terminal and a base station, wherein
the terminal comprises:
a receiving unit (710, 1810) configured to receive downlink control information, DCl, by using a narrowband downlink control channel;
a determining unit (720, 1820) configured to determine activation or deactivation of semi-persistent scheduling, SPS, based on a correspondence relationship between a value of a modulation and coding scheme, MCS, field in the DCI and the activation or deactivation of the SPS, and
the base station comprises:
a transmitting unit configured to transmit the DCI by using a narrowband downlink control channel,
wherein the determining unit further determines the deactivation of the SPS, based on a value of a number-of-repetition-times field and a value of a subcarrier indication field.

## Patentansprüche

1. Endgerät, umfassend:
eine Empfangseinheit (710, 1810), die konfiguriert ist, Downlink-Steuerinformationen, DCl, unter Verwendung eines Schmalband-Downlink-Steuerkanals zu empfangen;
eine Ermittlungseinheit (720, 1820), die konfiguriert ist, Aktivierung oder Deaktivierung semi-persistenter Planung, SPS, basierend auf einem Entsprechungsverhältnis zwischen einem Wert eines Modulations- und Codierungsschemen-, MCS, Felds in den DCI und der Aktivierung oder Deaktivierung der SPS zu ermitteln,
wobei die Ermittlungseinheit weiter die Deaktivierung der SPS basierend auf einem Wert eines Wiederholungsanzahlfelds und einem Wert eines Subträgerangabefelds ermittelt.

2. Endgerät nach Anspruch 1, wobei:
der Wert des MCS-Felds, der der Deaktivierung der SPS in den DCI entspricht, ein spezifischer Wert eines reservierten Felds ist.

3. Funkkommunikationsverfahren für ein Endgerät, umfassend:
Empfangen von Downlink-Steuerinformationen, DCl, unter Verwendung eines Schmalband-Downlink-Steuerkanals;
Ermitteln von Aktivierung oder Deaktivierung semi-persistenter Planung, SPS, basierend auf einem Entsprechungsverhältnis zwischen einem Wert eines Modulations- und Codierungsschemen-, MCS, Felds in den DCI und der Aktivierung oder Deaktivierung der SPS, wobei die Deaktivierung der SPS, weiter basierend auf einem Wert eines Wiederholungsanzahlfelds und einem Wert eines Subträgerangabefelds ermittelt wird.

4. Basisstation, umfassend:
eine Erzeugungseinheit, die konfiguriert ist, Downlink-Steuerinformationen, DCl, zu erzeugen, die einen Wert eines Modulations- und Codierungsschemen-, MCS, Felds beinhalten, entsprechend einer Aktivierung oder Deaktivierung semi-persistenter Planung, SPS; und
eine Übertragungseinheit, die konfiguriert ist, die DCI unter Verwendung eines Schmalband-Downlink-Steuerkanals zu übertragen,
wobei die Erzeugungseinheit weiter die DCI erzeugt, die einen Wert eines Wiederholungsanzahlfelds und einen Wert eines Subträgerangabefelds beinhalten, die der Deaktivierung der SPS entsprechen.

5. System, umfassend ein Endgerät und eine Basisstation, wobei das Endgerät umfasst:
eine Empfangseinheit (710, 1810), die konfiguriert ist, Downlink-Steuerinformationen, DCl, unter Verwendung eines Schmalband-Downlink-Steuerkanals zu empfangen;
eine Ermittlungseinheit (720, 1820), die konfiguriert ist, Aktivierung oder Deaktivierung semi-persistenter Planung, SPS, basierend auf einem Entsprechungsverhältnis zwischen einem Wert eines Modulations- und Codierungsschemen-, MCS, Felds in den DCI und der Aktivierung oder Deaktivierung der SPS zu ermitteln, und
die Basisstation umfasst:
eine Übertragungseinheit, die konfiguriert ist, die DCI unter Verwendung eines Schmalband-Downlink-Steuerkanals zu übertragen,
wobei die Ermittlungseinheit weiter die Deaktivierung der SPS basierend auf einem Wert eines Wiederholungsanzahlfelds und einem Wert eines Subträgerangabefelds ermittelt.

## Revendications

1. Terminal, comprenant :
une unité de réception (710, 1810) configurée pour recevoir des informations de commande de liaison descendante, DCl, au moyen d'un canal de commande de liaison descendante à bande étroite ;
une unité de détermination (720, 1820) configurée pour déterminer l'activation ou la désactivation d'une programmation semi-permanente, SPS, sur la base d'une relation de correspondance entre une valeur d'un champ de système de modulation et de codage, MCS, dans les DCI et l'activation ou la désactivation de la SPS,
dans lequel l'unité de détermination détermine en outre la désactivation de la SPS, sur la base d'une valeur d'un champ de nombre de cycles de répétition et d'une valeur d'un champ d'indication de sous-porteuse.

2. Terminal selon la revendication 1, dans lequel :
la valeur du champ MCS correspondant à la désactivation de la SPS dans les DCI est une valeur spécifique d'un champ réservé.

3. Procédé de communication radio pour un terminal, comprenant les étapes consistant à :
recevoir des informations de commande de liaison descendante, DCl, au moyen d'un canal de commande de liaison descendante à bande étroite ;
déterminer l'activation ou la désactivation d'une programmation semi-permanente, SPS, sur la base d'une relation de correspondance entre une valeur d'un champ de système de modulation et de codage, MCS, dans les DCI et l'activation ou la désactivation de la SPS, dans lequel la désactivation de la SPS est en outre déterminée sur la base d'une valeur d'un champ de nombre de cycles de répétition et d'une valeur d'un champ d'indication de sous-porteuse.

4. Station de base, comprenant :
une unité de génération configurée pour générer des informations de commande de liaison descendante, DCl, comprenant une valeur d'un champ de système de modulation et de codage, MCS, correspondant à l'activation ou la désactivation d'une programmation semi-permanente, SPS ; et
une unité de transmission configurée pour émettre les DCI au moyen d'un canal de commande de liaison descendante à bande étroite,
dans laquelle l'unité de génération génère en outre les DCI incluant une valeur d'un champ de nombre de cycles de répétition et une valeur d'un champ d'indication de sous-porteuse qui correspondent à la désactivation de la SPS.

5. Système comprenant un terminal et une station de base, dans lequel le terminal comprend :
une unité de réception (710, 1810) configurée pour recevoir des informations de commande de liaison descendante, DCl, au moyen d'un canal de commande de liaison descendante à bande étroite ;
une unité de détermination (720, 1820) configurée pour déterminer l'activation ou la désactivation d'une programmation semi-permanente, SPS, sur la base d'une relation de correspondance entre une valeur d'un champ de système de modulation et de codage, MCS, dans les DCI et l'activation ou la désactivation de la SPS, et
la station de base comprend :
une unité de transmission configurée pour émettre les DCI au moyen d'un canal de commande de liaison descendante à bande étroite,
dans lequel l'unité de détermination détermine en outre la désactivation de la SPS, sur la base d'une valeur d'un champ de nombre de cycles de répétition et d'une valeur d'un champ d'indication de sous-porteuse.
